# EUROPEAN PATENT SPECIFICATION

(11) **EP 4 530 059 B1**
(45) Date of publication and mention of the grant of the patent: **18.02.2026**
(21) Application number: 24201609.5
(22) Date of filing: 20.09.2024
(51) Int. Cl.: B32B 3/04, B32B 15/14, B32B 15/20

(54) **THERMAL INSULATION ELEMENT FOR BATTEY AND METHOD FOR MAKING THE SAME**
WÄRMEDÄMMELEMENT FÜR EINE MATTE UND VERFAHREN ZU DESSEN HERSTELLUNG
ELÉMENT D'ISOLATION THERMIQUE POUR NAPPE ET PROCÉDÉ DE FABRICATION DE CELUI-CI

(30) Priority: 26.09.2023 CN 202311266573; 26.09.2023 CN 202322644336 U; 26.09.2023 CN 202322644350 U
(43) Date of publication of application: 02.04.2025
(73) Proprietor: Gongyi Van-Research Innovation Composite Material Co., Ltd., Zhengzhou, Henan 451261 (CN)
(72) Inventor: ZHANG, Jicheng, Zhengzhou, Henan, 451261 (CN); WU, Yu, Zhengzhou, Henan, 451261 (CN); LIU, Xizong, Zhengzhou, Henan, 451261 (CN); ZHANG, Dongsheng, Zhengzhou, Henan, 451261 (CN)
(74) Representative: Herrero & Asociados, S.L.

(56) References cited:
- CN-A- 116 057 756
- CN-U- 219 642 955

## Description

### TECHNICAL FIELD

The present disclosure relates to the field of power battery technologies, and in particular to a thermal insulation element and a method for making the thermal insulation element.

### BACKGROUND

Aerogel is known as a super thermal insulation material. The aerogel is generally compounded with inorganic fibers, so as to form an aerogel thermal insulation felt, an aerogel thermal insulation plate, or other aerogel thermal insulation elements with special shapes, etc., thereby giving full play to the excellent thermal insulation performance of aerogel materials.

The aerogel is fragile. An aerogel composite is formed by compounding the aerogel with a fiber felt composite. During applying the aerogel composite in various fields such as architecture, shedding powders still exists, which may lead to decrease of thermal insulation performance of the aerogel composite.

The energy storage batteries and power batteries in related art have thermal runaway problems, thus, it is necessary to carry out thermal management of the batteries. A thermal insulation element is disposed between two adjacent battery cells, so as to isolate thermal transfer between two adjacent battery cells. In response to a thermal runaway occurring in a battery cell, the thermal insulation element prevent heat from being transferred to adjacent cells, thereby prevent adjacent battery cells from failing.

The commonly used thermal insulation elements generally include an aerogel composite layer or a thermal insulation film that is made from thermal insulation nano-powders. However, shedding powders exists in each of the aerogel composite layer and the thermal insulation film.

CN219642955U provides a battery pack, which includes a plurality of single batteries and at least one heat insulation pad clamped between two adjacent single batteries, the heat insulation pad includes a heat insulation structure and a packaging layer used for packaging the heat insulation structure, and the heat insulation structure includes a non-solid phase change material. At least one first area is arranged on the heat insulation pad, the thickness of the heat insulation pad in the first area is m, the width of a gap between two adjacent single batteries clamping the heat insulation pad is M, and m and M meet the condition that m is less than M.

CN116057756A provides a thermal runaway barrier for at least significantly mitigating thermal runaway events within a battery assembly. The thermal runaway barrier includes a non-woven fibrous thermal insulation layer including a fibrous matrix of inorganic fibers, thermally insulating inorganic particles of an irreversibly or permanently expanding expandable inorganic material dispersed within the fibrous matrix, and a binder dispersed within the fibrous matrix to hold the fibrous matrix together. An optional organic encapsulation layer may also be used to encapsulate the nonwoven fibrous thermal insulation.

### SUMMARY OF THE DISCLOSURE

The present disclosure provides a thermal insulation element applied for a battery and a method for making the thermal insulation element, aiming to solve the problem that the thermal insulation performance of the thermal insulation element decreases after the thermal insulation element is encapsulated with a plastic encapsulating film in related art. The invention is set out in the appended set of claims.

Different from the related art, the effects of the present disclosure are as follows. The present disclosure provides the thermal insulation element and the method for making the thermal insulation element. The thermal insulation element includes the thermal insulation layer, the metal foil, and the plastic encapsulating film. The metal foil is disposed on the surface of the thermal insulation layer. The plastic encapsulating film is disposed on the surface of the thermal insulation layer and/or the surface of the metal foil. The plastic encapsulating film forms the closed space, or the plastic encapsulating film cooperates with the metal foil to form the closed space. The metal foil is disposed on the surface of thermal insulation layer, so as to prevent the plastic encapsulating film from being in direct contact with the thermal insulation layer, thereby effectively preventing the liquid generated by the melting of the plastic encapsulating film at the high temperature from infiltrating into the pores of the thermal insulation layer and preventing the formation of the thermal bridge, and preventing the decrease of the thermal insulation performance of the thermal insulation layer. The metal foil can effectively prevent thermal infrared radiation, further improving the thermal insulation performance of the thermal insulation element. Compared with directly encapsulating the thermal insulation layer with the plastic encapsulating film, a product is formed by disposing the metal foil on the surface of the thermal insulation layer and then encapsulating with the plastic encapsulating film, and the thermal insulation performance of the product at the high temperature is improved by 60%. On the other hand, above encapsulating method can also meet the insulation and voltage resistance requirements of the thermal insulation element in the battery field.

### BRIEF DESCRIPTION OF THE DRAWINGS

FIG. 1a is a structural schematic view of a thermal insulation element in a first embodiment of the present disclosure.
FIG. 1b is a cross-sectional structural schematic view of the thermal insulation element shown in FIG. 1a along a A-A line.
FIG. 2a is a structural schematic view of the thermal insulation element after removing a plastic encapsulating film in a second embodiment of the present disclosure.
FIG. 2b is a cross-sectional structural schematic view of a structure shown in FIG. 2a along a B-B line.
FIG. 3 is a structural schematic view of the thermal insulation element after removing the plastic encapsulating film in another embodiment of the present disclosure.
FIG. 4 is a structural schematic view of the thermal insulation element after removing the plastic encapsulating film in yet another embodiment of the present disclosure.
FIG. 5a is a structural schematic view of the thermal insulation element after removing the plastic encapsulating film in a third embodiment of the present disclosure.
FIG. 5b is a cross-sectional structural schematic view of a structure shown in FIG. 5a along a C-C line.
FIG. 6a is a structural schematic view of the thermal insulation element after removing the plastic encapsulating film in a fourth embodiment of the present disclosure.
FIG. 6b is a cross-sectional structural schematic view of a structure shown in FIG. 6a along a D1-D1 line.
FIG. 6c is a cross-sectional structural schematic view of the structure shown in FIG. 6a along a D2-D2 line.
FIG. 7a is a structural schematic view of the thermal insulation element in a fifth embodiment of the present disclosure.
FIG. 7b is a cross-sectional structural schematic view of the thermal insulation element shown in FIG. 7a along a E-E line.
FIG. 7c is a cross-sectional structural schematic view of the thermal insulation element shown in FIG. 7a along a F-F line.
FIG. 8a is a structural schematic view of the thermal insulation element in a sixth embodiment of the present disclosure.
FIG. 8b is a cross-sectional structural schematic view of the thermal insulation element shown in FIG. 8a along a G-G line.
FIG. 8c is a cross-sectional structural schematic view of the thermal insulation element shown in FIG. 8a along a H-H line.
FIG. 9a is a structural schematic view of the thermal insulation element in a seventh embodiment of the present disclosure.
FIG. 9b is a cross-sectional structural schematic view of the thermal insulation element shown in FIG. 9a along a I-I line.
FIG. 10a is a structural schematic view of the thermal insulation element in an eighth embodiment of the present disclosure.
FIG. 10b is a cross-sectional structural schematic view of the thermal insulation element shown in FIG. 10a along a J-J line.
FIG. 11a is a structural schematic view of the thermal insulation element provided in a ninth embodiment of the present disclosure.
FIG. 11b is a structural schematic view of a structure shown in FIG. 11a after removing an encapsulating layer.
FIG. 11c is a cross-sectional structural schematic view of the thermal insulation element shown in FIG. 11a along a K-K line.
FIG. 12a is a structural schematic view of the thermal insulation element after removing the plastic encapsulating film in the tenth embodiment of the present disclosure.
FIG. 12b is a cross-sectional structural schematic view of a structure shown in FIG. 12a along a L-L line.
FIG. 13a is a structural schematic view of the thermal insulation element after removing the plastic encapsulating film in another embodiment of the present disclosure.
FIG. 13b is a structural schematic view of the thermal insulation element after removing the plastic encapsulating film in another embodiment of the present disclosure.
FIG. 14a is a structural schematic view of the thermal insulation element after removing the plastic encapsulating film in the eleventh embodiment of the present disclosure.
FIG. 14b is a cross-sectional structural schematic view of the structure shown in FIG. 14a along a M-M line.
FIG. 15a is a structural schematic view of the thermal insulation element in the twelfth embodiment of the present disclosure.
FIG. 15b is a cross-sectional structural schematic view of the thermal insulation element shown in FIG. 15a along a N-N line.
FIG. 15C is a cross-sectional structural schematic view of the thermal insulation element shown in FIG. 15a along a O-O line.
FIG. 16a is a structural schematic view of the thermal insulation element in the thirteenth embodiment of the present disclosure.
FIG. 16b is a cross-sectional structural schematic view of the thermal insulation element shown in FIG. 16a along a P-P line.
FIG. 17a is a structural schematic view of the thermal insulation element in a fourteenth embodiment of the present disclosure.
FIG. 17b is a cross-sectional structural schematic view of the thermal insulation element shown in FIG. 17a along a Q-Q line.
FIG. 17c is a cross-sectional structural schematic view of the thermal insulation element shown in FIG. 17a along a R-R line.
FIG. 18a is a structural schematic view of the thermal insulation element in a fifteenth embodiment of the present disclosure.
FIG. 18b is a structural schematic view of a metal foil of the thermal insulation element shown in FIG. 18a before folding.
FIG. 18c is a cross-sectional structural schematic view of the thermal insulation element shown in FIG. 18a along a S-S line.

Explanation of reference signs are as follows.
100 - thermal insulation element; 1 - thermal insulation layer; 2 - metal foil; 3 - plastic encapsulating film; 11 - first surface; 12 - second surface; 13 - first side surface; 14 - second side surface; 15 - third side surface; 16 - fourth side surface; 21 - first metal sub-foil; 22 - second metal sub-foil; 23 - third metal sub-foil; 24 - fourth metal sub-foil; 25 - pleat; 31 - first plastic encapsulating sub-film; 32 - second plastic encapsulating sub-film; 33 - sealing edge; 4 - encapsulating layer; 5 - adhesive layer; 50 - opening; 51- adhesive frame; 5a - first adhesive layer; 5b - second adhesive layer; 215 - first pleat; 216 - second pleat; 217 - main body; 218 - extension part; 219 - first metal foil; 210 - second metal foil.

### DETAILED DESCRIPTION

The technical solutions in some embodiments of the present disclosure may be clearly and completely described in conjunction with accompanying drawings in some embodiments of the present disclosure. Obviously, the described embodiments are only a part of the embodiments of the present disclosure, and not all embodiments. Based on the embodiments in the present disclosure, all other embodiments obtained by those of ordinary skill in the art without creative effort are within the scope of the present disclosure.

The terms "first", "second", and "third" in the present disclosure are only configured to describe purposes and cannot be understood as indicating or implying relative importance or implicit indicating the quantity of technical features indicated. Therefore, features limited to "first", "second", and "third" may explicitly or implicitly include at least one of these features. In the description of the present disclosure, "multiple" means at least two, such as two, three, etc., unless otherwise expressly and specifically qualified. All directional indications (such as up, down, left, right, front, rear, or the like) in some embodiments of the present disclosure are only configured to explain a relative position relationship between components in a specific posture (as shown in the accompanying drawings), a motion situation between the components in the specific posture (as shown in the accompanying drawings), or the like. If the specific posture is changed, the directional indication is also changed accordingly. In addition, the terms "including", "comprising", and "having", as well as any variations of the terms "including", "comprising", and "having", are intended to cover non-exclusive inclusions. For example, a process, method, system, product, or device that includes a series of operations or units is not limited to the listed operations or units, but optionally includes operations or units that are not listed, or optionally includes other operations or units that are inherent to these processes, methods, products, or devices.

The reference to "embodiments" in the present disclosure means that, specific features, structures, or characteristics described in conjunction with some embodiments may be included in at least one embodiment of the present disclosure. The phrase appearing in various positions in the specification does not necessarily refer to the same embodiment, nor is it an independent or alternative embodiment that is mutually exclusive with other embodiments. Those of ordinary skill in the art explicitly and implicitly understand that the embodiments described in the present disclosure can be combined with other embodiments.

The present disclosure provides a thermal insulation element including a thermal insulation layer and an encapsulating layer, and the encapsulating layer can be a metal foil and/or a plastic encapsulating film. The plastic encapsulating film is configured to encapsulate the thermal insulation layer, so as to prevent the thermal insulation layer from shedding powders, and shedding powders can affect the performance of the battery. A material of the plastic encapsulating film is generally an organic material, such as polyester, polyimide, polyvinyl chloride, polyethylene, polypropylene, polycarbonate, etc. The thermal insulation layer is usually encapsulated by hot pressing. However, the thermal insulation performance of the thermal insulation element decreases after encapsulating the thermal insulation layer with the plastic encapsulating film being the organic material. The inventor of the present disclosure finds that at least surface of the thermal insulation layer defines pores, and the organic material can melt to form liquid at a high temperature. The liquid can infiltrate into the pores of the thermal insulation layer, so that a thermal bridge is formed inside the thermal insulation layer, thus, the thermal insulation performance of the thermal insulation layer decreases.

Based on this, the embodiments of the present disclosure provide a thermal insulation element and a method for making the thermal insulation element. The thermal insulation element can effectively prevent the liquid generated by the plastic encapsulating film at the high temperature from infiltrating into the thermal insulation layer and prevent the formation of the thermal bridge, thereby effectively improving the thermal insulation performance of the thermal insulation element.

The present disclosure may be explained in detail by combining the accompanying drawings and some embodiments.

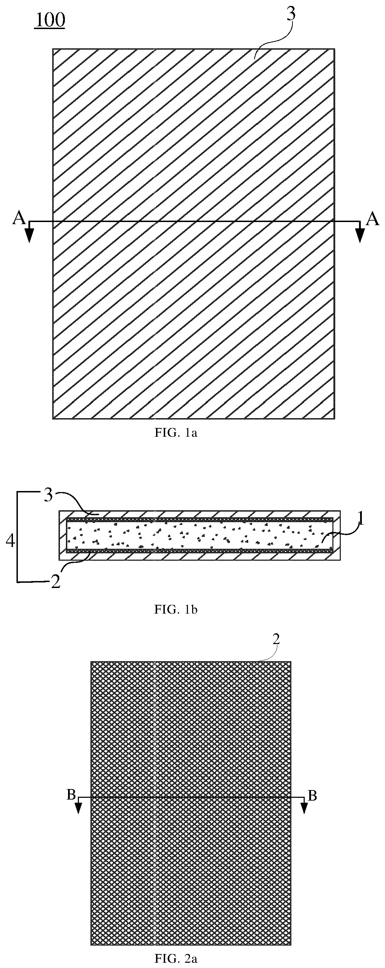

Referring to FIGS. 1a-1b, FIG. 1a is a structural schematic view of a thermal insulation element in a first embodiment of the present disclosure, and FIG. 1b is a cross-sectional structural schematic view of the thermal insulation element shown in FIG. 1a along a A-A line. The present disclosure provides a thermal insulation element 100, and the thermal insulation element 100 can be applied to, but is not limited to, a power battery, so as to isolate thermal transfer inside the power battery. The thermal insulation element 100 may include a thermal insulation layer 1, a metal foil 2, and a plastic encapsulating film 3. The metal foil 2 and/or the plastic encapsulating film 3 can form an encapsulating layer 4. Thus, the thermal insulation element 100 includes the thermal insulation layer 1 and the encapsulating layer 4, and the encapsulating layer 4 includes the metal foil 2 and/or the plastic encapsulating film 3. Thermal insulation layer 1 is configured to prevent the heat generated by a battery cell from transferring outward, thereby preventing thermal runaway from spreading inside the battery. The metal foil 2 is disposed on a surface of the thermal insulation layer 1, so as to decrease thermal infrared radiation and improve the thermal insulation performance of the thermal insulation element 100. The plastic encapsulating film 3 can be covered on the surface of the thermal insulation layer 1. The plastic encapsulating film 3 can be combined with the metal foil 2 to form a closed space to encapsulate the thermal insulation layer 1. The plastic encapsulating film 3 can also be covered on the surface of the thermal insulation layer 1 and the surface of the metal foil 2, and the plastic encapsulating film 3 itself forms the enclosed space to encapsulate the thermal insulation layer 1.

The metal foil 2 is disposed on the surface of thermal insulation layer 1, so as to prevent the plastic encapsulating film 3 from being in direct contact with the thermal insulation layer 1, thereby effectively preventing the liquid generated by the melting of the plastic encapsulating film 3 at the high temperature from infiltrating into the pores of the thermal insulation layer 1 and preventing the formation of the thermal bridge, and preventing the decrease of the thermal insulation performance of the thermal insulation layer 1. A traditional product is formed by directly encapsulating the thermal insulation layer 1 only with the plastic encapsulating film 3, and a product of this disclosure is formed by disposing the metal foil 2 on the surface of the thermal insulation layer 1 and then encapsulating both the thermal insulation layer 1 and the metal foil 2 with the plastic encapsulating film 3. Compared with the traditional product, the thermal insulation performance of the product of this disclosure at the high temperature is improved by 60%. On the other hand, above encapsulating method can also meet the insulation and voltage resistance requirements of the thermal insulation element 100 in the battery field.

A shape of the thermal insulation layer 1 is not limited to a triangle, a rectangle, a circle, or an ellipse, etc. In the present disclosure, the thermal insulation layer 1 being a rectangle is taken as an example for explanation.

In some embodiments, the thermal insulation layer 1 may include an aerogel composite layer. The aerogel composite layer can include an aerogel composite made from an aerogel and a fiber felt. The aerogel can provide good thermal insulation performance for the thermal insulation layer 1, and the fiber felt can provide necessary mechanical strength for the thermal insulation layer 1. The aerogel can be a silica aerogel, an alumina aerogel or a mixture of the silica aerogel and the alumina aerogel. The fiber felt can be one or more of a ceramic fiber felt, a glass fiber felt, and a pre-oxidized fiber felt. In the present embodiment, the fiber felt is the glass fiber felt, so that the thermal insulation layer 1 has excellent thermal insulation performance at the high temperature.

In some embodiments, the aerogel composite layer can also include the aerogel composite formed by combining an open pore macro-porous skeleton material and the aerogel. The open pore macro-porous skeleton material can be made from melamine, so as to improve the mechanical strength of the thermal insulation layer 1.

In some embodiments, the thermal insulation layer 1 may also include a thermal insulation film. The thermal insulation film includes thermal insulation nano-powders and reinforcing fibers. The thermal insulation film is formed by stirring and uniformly dispersing the thermal insulation nano-powders and the reinforcing fibers, and then pressing. The reinforcing fibers are configured to improve the mechanical strength of the thermal insulation layer 1. The thermal insulation nano-powders are evenly distributed on the surfaces of the reinforcing fibers and in the gaps between the reinforcing fibers, so as to improve the thermal insulation performance of the thermal insulation layer 1. In these embodiments, the thermal insulation film may further include an infrared radiation light-blocking agent, so as to prevent the infrared radiation and further improve the thermal insulation performance of the thermal insulation layer 1.

At least surface of the thermal insulation layer 1 is grafted with a hydrophobic modifier, so as to improve the hydrophobic performance of the thermal insulation layer 1 and prevent the liquid from infiltrating into the thermal insulation layer 1, thereby preventing decrease of the thermal insulation performance of the thermal insulation layer 1. In some embodiments, the thermal insulation layer 1 is the aerogel composite layer, and the hydrophobic aerogel composite can be formed by one-step hydrophobic method. In some embodiments, the thermal insulation layer 1 is the thermal insulation film, and the thermal insulation film can be formed by combining hydrophobic thermal insulation nano-powders and the reinforcing fibers. The hydrophobic modifier includes any one or more of methyltrimethoxysilane, methyltriethoxysilane, ethyltrimethoxysilane, ethyltriethoxysilane, propyltrimethoxysilane, chloropropyltriethoxysilane, chloropropyltrimethoxysilane, chloropropylmethyldimethoxysilane, dimethyldimethoxysilane, dimethyldiethoxysilane, diethyldimethoxysilane, diethyldiethoxysilane, trimethylchlorosilane, hexamethyldisiloxane, and hexamethyldisilazane.

The metal foil 2 can include one or more of an aluminum foil, a nickel foil, and a copper foil. In some embodiments, the metal foil 2 is formed by using alloys of different materials mentioned above. In some embodiments, the thermal insulation layer 1 includes two opposite surfaces, one of the two opposite surfaces is provided with one metal foil 2, and the other of the two opposite surfaces is provided with another metal foil 2, and the one metal foil 2 and the another metal foil 2 have different materials. In some embodiments, the metal foil 2 is the aluminum foil, a melting point of the aluminum foil is greater than 660°C, which can meet the melting point requirements of middle and low temperature thermal insulation element 100 applied to the battery. The aluminum foil can effectively prevent the thermal infrared radiation, thereby effectively improving the thermal insulation performance of the thermal insulation element 100. In addition, the aluminum foil has a lower cost, thereby effectively reducing production costs of the thermal insulation element 100.

The plastic encapsulating film 3 may include an organic film that can melt and generate the liquid at the high temperature. A material of the organic film can include any one or more of polyester, polyimide, polyvinyl chloride, polyethylene, polypropylene, and polycarbonate. In some embodiments, the material of the plastic encapsulating film 3 can be a mixture of the above materials. In some embodiments, the thermal insulation layer 1 includes two opposite surfaces, one of the two opposite surfaces is provided with one plastic encapsulating film 3, and the other of the two opposite surfaces is provided with another plastic encapsulating film 3, and the one plastic encapsulating film 3 and the another plastic encapsulating film 3 have different materials.

In some embodiments, a thickness of the thermal insulation element 100 is less than or equal to 5mm, thereby effectively improving the thermal insulation performance of the thermal insulation element 100 after the metal foil 2 is disposed on the surface of the thermal insulation layer 1. In some embodiments, the thickness of the thermal insulation element 100 can be 0.5mm, 1.0mm, 1.5mm, 2.0mm, 3.0mm, 3.5mm, 4mm, 4.5mm, or 5mm, etc. Those of ordinary skill in the art can understand that during directly encapsulating a thicker thermal insulation layer 1 with the plastic encapsulating film 3, the liquid generated by the melting of the plastic encapsulating film 3 at the high temperature can infiltrate into the pores of the thermal insulation layer 1. However, because the thermal insulation layer 1 is relatively thick, the liquid formed by melted plastic encapsulating film 3 cannot infiltrate into the thermal insulation layer 1 to form the thermal bridge, and the plastic encapsulating film 3 does not significantly affect the thermal insulation performance of the thermal insulation layer 1. However, for ultra-thin thermal insulation layer 1, such as the thermal insulation layer 1 with a thickness less than 5mm, the inventor finds that the thermal insulation performance of the thermal insulation layer 1 at the high temperature can significantly decrease after directly encapsulating the thermal insulation layer 1 with the plastic encapsulating film 3, thereby making the thermal insulation element 100 unable to meet the thermal insulation performance requirements of the product. Thus, disposing the metal foil 2 on the surface of the thermal insulation layer 1 and then encapsulating with the plastic encapsulating film 3 can significantly improve the thermal insulation performance of the ultra-thin thermal insulation layer 1.

In the present embodiment, the thickness of the thermal insulation element 100 is less than or equal to 1.2mm, so that the metal foil 2 more effectively improves the thermal insulation performance of the thermal insulation element 100. In some embodiments, the thickness of the thermal insulation element 100 can be 0.1mm, 0.3mm, 0.5mm, 1.0mm, or 1.2mm, etc. In some embodiments, the thickness of the thermal insulation layer 1 is less than or equal to 1.0mm, such as 0.1mm, 0.3mm, 0.5mm, 0.8mm, or 1.0mm, etc. In some embodiments, the thickness of the metal foil 2 is greater than or equal to 0.01 mm and less than or equal to 0.1 mm, such as 0.01mm, 0.03mm, 0.05mm, 0.08mm, or 0.1mm, etc. The thickness of the plastic encapsulating film 3 is greater than or equal to 0.01 mm and less than or equal to 0.3 mm, such as 0.05mm, 0.1mm, 0.15mm, 0.2mm, or 0.3mm, etc.

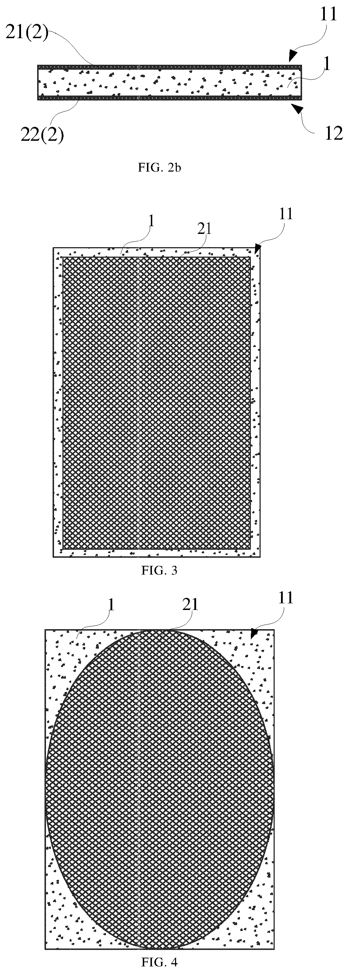

Referring to FIGS. 2a-2b, FIG. 2a is a structural schematic view of the thermal insulation element after removing a plastic encapsulating film in a second embodiment of the present disclosure, and FIG. 2b is a cross-sectional structural schematic view of a structure shown in FIG. 2a along a B-B line. In the present embodiment, the thermal insulation layer 1 includes a first surfaces 11 and a second surfaces 12 opposite to each other. The metal foil 2 includes and only includes a first metal sub-foil 21 disposed on the first surface 11 and a second metal sub-foil 22 disposed on the second surface 12. An edge of the first metal sub-foil 21 can be flush with an edge of the first surface 11, and an edge of the second metal sub-foil 22 can also be flush with an edge of the second surface 12. Those of ordinary skill in the art can understand that if the first metal sub-foil 21 extends beyond the first surface 11 of the thermal insulation layer 1, and the second metal sub-foil 22 extends beyond the second surface 12 of the thermal insulation layer 1, a part of the first metal sub-foil 21 extending beyond the first surface 11 of the thermal insulation layer 1 and a part of the second metal sub-foil 22 extending beyond the second surface 12 of the thermal insulation layer 1 can form protruding metal foil edges, and the protruding metal foil edges can adversely affect the performance of the thermal insulation element 100. However, in the present embodiment, the first metal sub-foil 21 and the second metal sub-foil 22 do not form the protruding metal foil edges. Thus, on the one hand, it can avoid adverse effects on the thermal insulation performance of the thermal insulation element 100. On the other hand, the first surface 11 and the second surface 12 of the thermal insulation layer 1 are completely covered by the first metal sub-foil 21 and the second metal sub-foil 22, thereby preventing the liquid generated by the melting of the plastic encapsulating film 3 from infiltrating into the thermal insulation layer 1.

Referring to FIGS. 3 and 4, FIG. 3 is a structural schematic view of the thermal insulation element after removing the plastic encapsulating film in another embodiment of the present disclosure, and FIG. 4 is a structural schematic view of the thermal insulation element after removing the plastic encapsulating film in yet another embodiment of the present disclosure. In some embodiments, the structure of the thermal insulation element 100 is approximately the same as the structure of the thermal insulation element 100 in the second embodiment. The difference is that in some embodiments, the edge of the first metal sub-foil 21 can be spaced apart from (as shown in FIG. 3) or tangent to the edge of the first surface 11 (as shown in FIG. 4), and the edge of the second metal sub-foil 22 can also be spaced apart from or tangent to the edge of the second surface 12. In some embodiments, a shape and a size of the first metal sub-foil 21 are different from a shape and a size of the second metal sub-foil 22. In some embodiments, the edge of the first metal sub-foil 21 is flush with the edge of the first surface 11, and the edge of the second metal sub-foil 22 is spaced apart from the edge of the second surface 12.

In some embodiments, the first metal sub-foil 21 can cover 90%-100% of an area of the first surface 11, and/or the second metal sub-foil 22 can cover 90%-100% of an area of the second surface 12. The metal foil 2 covers the surface of the thermal insulation layer 1 as much as possible, so as to prevent the liquid generated by the plastic encapsulating film 3 from infiltrating into the thermal insulation layer 1 at the high temperature. The thermal insulation element 100 of the present disclosure is configured to transfer the heat generated by the battery cell outward, thereby preventing thermal runaway from spreading inside the battery. Thus, the thermal insulation element 100 needs to have good insulation performance at the high temperature caused by the thermal runaway of the battery cell. The first metal sub-foil 21 covers more than 90% of the area of the first surface 11, and the second metal sub-foil 22 covers more than 90% of the area of the second surface 12. Thus, the thermal insulation performance of the thermal insulation element 100 significantly slows down at the high temperature caused by the thermal runaway of the battery cell, thereby more effectively preventing the thermal runaway from spreading inside the battery.

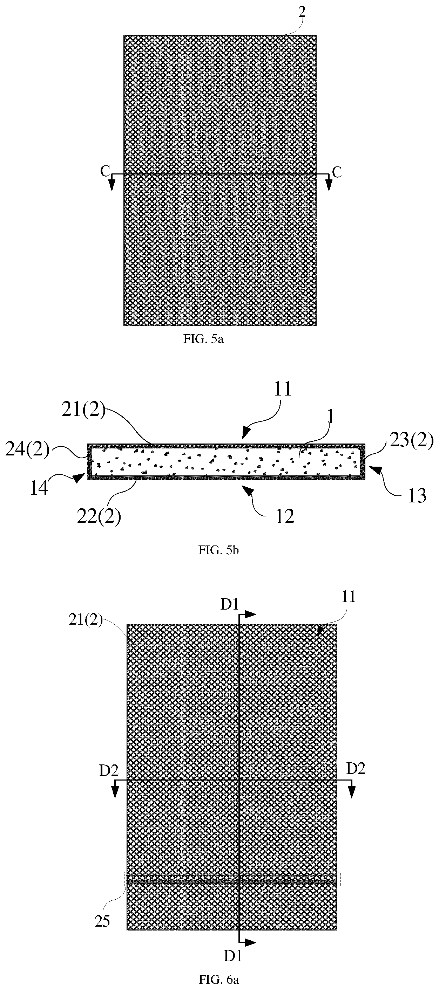

Referring to FIGS. 5a-5b, FIG. 5a is a structural schematic view of the thermal insulation element after removing the plastic encapsulating film in a third embodiment of the present disclosure, and FIG. 5b is a cross-sectional structural schematic view of a structure shown in FIG. 5a along a C-C line. The structure of the thermal insulation element 100 in the third embodiment of the present disclosure is approximately the same as the structure of the thermal insulation element 100 in the second embodiment. The difference is that in the third embodiment, the thermal insulation layer 1 further includes a first side surface 13 that is connected to the first surface 11 and the second surface 12. The first side surface 13 is a side surface corresponding to a long side of the thermal insulation layer 1. The metal foil 2 further includes a third metal sub-foil 23 disposed on the first side surface 13, so as to increase the area of the thermal insulation layer 1 covered by the metal foil 2, further improving the thermal insulation performance of the thermal insulation element 100. In some embodiments, the first side surface 13 may also be a side surface corresponding to a short side of the thermal insulation layer 1. The number of the side surfaces of the thermal insulation layer 1 is not limited, which is related to the shape of the thermal insulation layer 1. For example, circular thermal insulation layer 1 only has one side surface, and wedge-shaped thermal insulation layer 1 has only three side surfaces.

In the present embodiment, the first metal sub-foil 21, the second metal sub-foil 22, and the third metal sub-foil 23 are formed by folding the same metal foil 2, so as to cover the first surface 11, the second surface 12, and the first side surface 13 of the thermal insulation layer 1. It is easier to position the first metal sub-foil 21 on the first surface 11, the second metal sub-foil 22 on the second surface 12, and the third metal sub-foil 23 on the first side surface 13, making the operations in the production process simpler and more convenient, thereby improving production efficiency.

Referring to FIG. 5b, the thermal insulation layer 1 further includes a second side surface 14 that is connected to the first surface 11 and the second surface 12 and is opposite to the first side surface 13. The metal foil 2 further includes a fourth metal sub-foil 24 disposed on the second side surface 14, so as to further increase the area of the thermal insulation layer 1 covered by the metal foil 2 and improve the thermal insulation performance of the thermal insulation element 100. The first metal sub-foil 21, the second metal sub-foil 22, the third metal sub-foil 23, and the fourth metal sub-foil 24 are formed by folding the same metal foil 2, so as to cover the first surface 11, the second surface 12, the first side surface 13, and the second side surface 14 of the thermal insulation layer 1, thereby preventing the metal foil 2 from shifting relative to the thermal insulation layer 1 and further preventing the decrease of the thermal insulation performance of the thermal insulation element 100. It can also make the positioning of the metal foil 2 and the thermal insulation layer 1 easier, so as to improve production efficiency.

In some embodiments, the metal foil 2 covers all surfaces of the thermal insulation layer 1. In some embodiments, the thermal insulation layer 1 is the rectangle and includes a third side surface (not shown in FIG. 5b) and a fourth side surface (not shown in FIG. 5b). The third side surface and the fourth side surface are connected to the first surface 11 and the second surface 12, and are opposite to each other. The first side surface 13, the second side surface 14, the third side surface, and the fourth side surface are connected in sequence. The metal foil 2 further includes a fifth metal sub-foil (not shown in FIG. 5b) disposed on the third side surface and a sixth metal sub-foil (not shown in FIG. 5b) disposed on the fourth side surface. In some embodiments, the first metal sub-foil 21, the second metal sub-foil 22, the third metal sub-foil 23, the fourth metal sub-foil 24, the fifth metal sub-foil, and the sixth metal sub-foil are formed by folding the same metal foil 2. Due to the metal foil 2 covering all surfaces of the thermal insulation layer 1, it effectively prevents the liquid generated by the melting of the plastic encapsulating film 3 at the high temperature from infiltrating into the thermal insulation layer 1 and prevents the formation of the thermal bridge, thereby improving the thermal insulation performance of the thermal insulation element 100.

In some embodiments, the thickness of the metal foil 2 is less than or equal to 20µm. In some embodiments, the thickness of the metal foil 2 can be any one of 1µm, 5µm, 10µm, 15µm, and 20µm, so as to minimize the thickness of the thermal insulation element 100.

In some embodiments, neither the metal foil 2 nor the plastic encapsulating film 3 forms a sealing edge 33 extending beyond the thermal insulation layer 1, so as to prevent the sealing edge 33 from conducting heat that affects the thermal insulation performance.

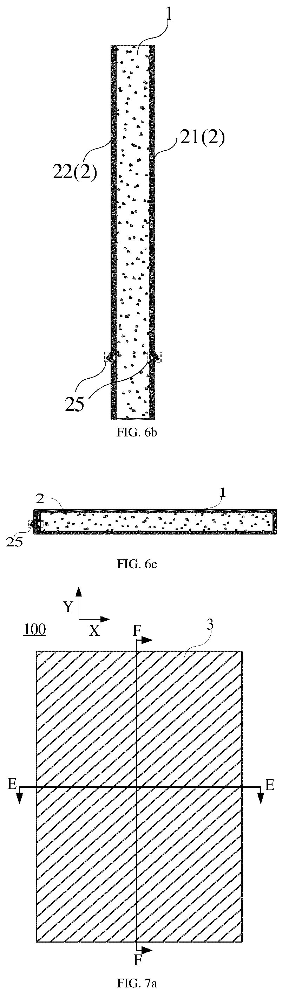

Referring to FIGS. 6a-6c, FIG. 6a is a structural schematic view of the thermal insulation element after removing the plastic encapsulating film in a fourth embodiment of the present disclosure, FIG. 6b is a cross-sectional structural schematic view of a structure shown in FIG. 6a along a D1-D1 line, and FIG. 6c is a cross-sectional structural schematic view of the structure shown in FIG. 6a along a D2-D2 line. The structure of the thermal insulation element 100 in the fourth embodiment of the present disclosure is approximately the same as the structure of the thermal insulation element 100 in the third embodiment. The difference is that in the fourth embodiment, the metal foil 2 includes at least one pleat 25. As shown in FIG. 6c, in the present embodiment, the metal foil 2 is folded to form a hollow cylindrical shape and wrap the thermal insulation layer 1 by 360 degrees. After folding the metal foil 2, the two opposite sides of the metal foil 2 can also partially overlap to form an overlapping area, and the pleat 25 is formed in the overlapping area. Thus, two opposite sides of the metal foil 2 are connected to each other, so that the thermal insulation layer 1 is wrapped or encapsulated with the metal foil 2.

The pleat 25 can be disposed on the first surface 11, the second surface 12, or the side surface of the thermal insulation layer 1. In the present embodiment, a sheet of metal foil 2 is folded to form the hollow cylindrical shape and wrap the thermal insulation layer 1 by 360 degrees. The pleat 25 that is formed by the two opposite sides of the metal foil 2 in the overlapping area are located on the side surface of the thermal insulation layer 1, so as to reduce the thickness of the thermal insulation element 100.

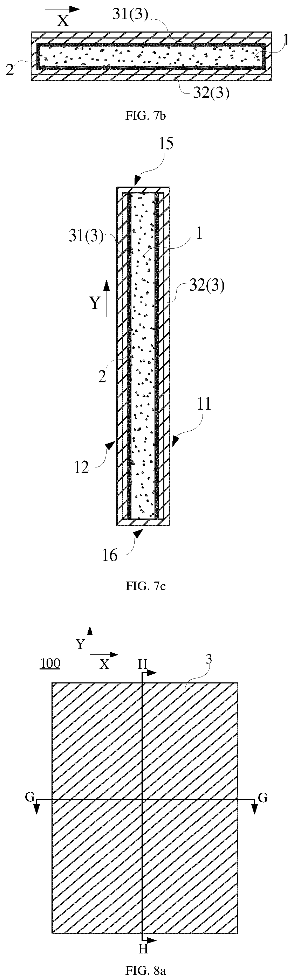

Referring to FIGS. 7a-7c, FIG. 7a is a structural schematic view of the thermal insulation element in a fifth embodiment of the present disclosure, FIG. 7b is a cross-sectional structural schematic view of the thermal insulation element shown in FIG. 7a along a E-E line, and FIG. 7c is a cross-sectional structural schematic view of the thermal insulation element shown in FIG. 7a along a F-F line. The structure of the thermal insulation element in the fifth embodiment of the present disclosure is approximately the same as the structure of the thermal insulation element 100 in the third embodiment. The difference is that in the fifth embodiment, the plastic encapsulating film 3 includes a first plastic encapsulating sub-film 31 and a second plastic encapsulating sub-film 32. Referring to FIG. 7a and FIG. 7b, the first plastic encapsulating sub-film 31 is folded along a first direction X to form a first hollow cylindrical shape, and the first hollow cylindrical shape wraps the thermal insulation layer 1 and the metal foil 2 by 360 degrees. The first plastic encapsulating sub-film 31 is covered on the metal foil 2. The folding along the first direction X in the present disclosure refers to folding something around a virtual axis parallel to the first direction X.

Referring to FIG. 7c, the thermal insulation layer 1 further includes a third side surface 15 that is connected to the first surface 11 and the second surface 12, and a fourth side surface 16 opposite to the third side surface 15. The second plastic encapsulating sub-film 32 is folded along a second direction Y to form a second hollow cylindrical shape, and the second hollow cylindrical shape wraps the thermal insulation layer 1 and the metal foil 2. The second plastic encapsulating sub-film 32 covers the third side surface 15 and the fourth side surface 16 of the thermal insulation layer 1, and the parts of the first plastic encapsulating sub-film 31 disposed on the first surface 11 and the second surface 12. The second direction Y is perpendicular to the first direction X. The first direction X and the second direction Y are parallel to the thermal insulation layer 1. The folding along the second direction Y in the present disclosure refers to folding something around a virtual axis parallel to the second direction Y. Thus, the first plastic encapsulating sub-film 31 and the second plastic encapsulating sub-film 32 cooperate to form the closed space, so as to encapsulate the thermal insulation layer 1, thereby avoiding adverse effects caused by shedding powders of the thermal insulation layer 1. The first plastic encapsulating sub-film 31 and the second plastic encapsulating sub-film 32 do not form the sealing edge 33 extending beyond the thermal insulation layer 1, so as to prevent the sealing edge 33 from conducting heat that affects the thermal insulation performance.

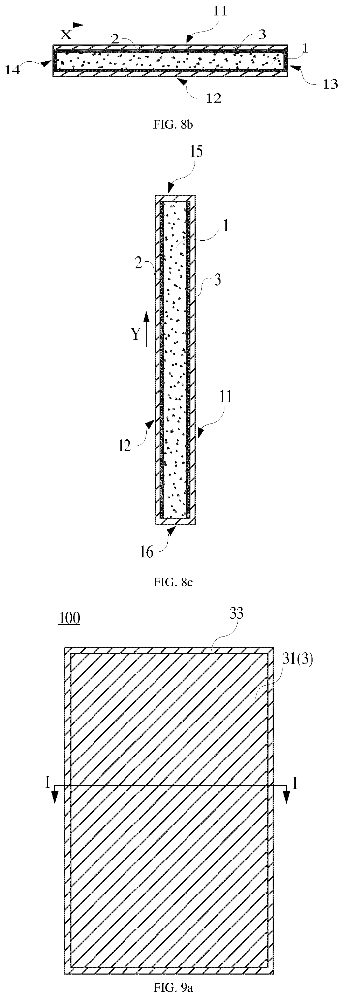

Referring to FIGS. 8a-8c, FIG. 8a is a structural schematic view of the thermal insulation element in a sixth embodiment of the present disclosure, FIG. 8b is a cross-sectional structural schematic view of the thermal insulation element shown in FIG. 8a along a G-G line, and FIG. 8c is a cross-sectional structural schematic view of the thermal insulation element shown in FIG. 8a along a H-H line. The structure of the thermal insulation element 100 in the sixth embodiment of the present disclosure is approximately the same as the structure of the thermal insulation element 100 in the third embodiment. The difference is that in sixth embodiment, the metal foil 2 is folded along the first direction X to form a first hollow cylindrical shape and wrap the thermal insulation layer 1 by 360 degrees. The metal foil 2 covers the first surface 11, the second surface 12, the first side surface 13, and the second side surface 14 of the thermal insulation layer 1.

Referring FIG. 8c, the thermal insulation layer 1 further includes the third side surface 15 that is connected to the first surface 11 and the second surface 12, and the fourth side 16 opposite to the third side 15. The plastic encapsulating film 3 is folded along the second direction Y to form the second hollow cylindrical shape and wraps the thermal insulation layer 1 and the metal foil 2 by 360 degrees. The plastic encapsulating film 3 covers the third side surface 15 and the fourth side surface 16 of the thermal insulation layer 1, and the parts of the metal foil 2 disposed on the first surface 11 and the second surface 12. Thus, the plastic encapsulating film 3 and the metal foil 2 cooperate to form the closed space, so as to encapsulate the thermal insulation layer 1, thereby avoiding the adverse effects caused by shedding powders of the thermal insulation layer 1 on the battery. The plastic encapsulating film 3 does not form the sealing edge 33 extending beyond the thermal insulation layer 1, so as to prevent the decrease of the thermal insulation performance, since the sealing edge 33 can conduct heat and decrease the thermal insulation performance.

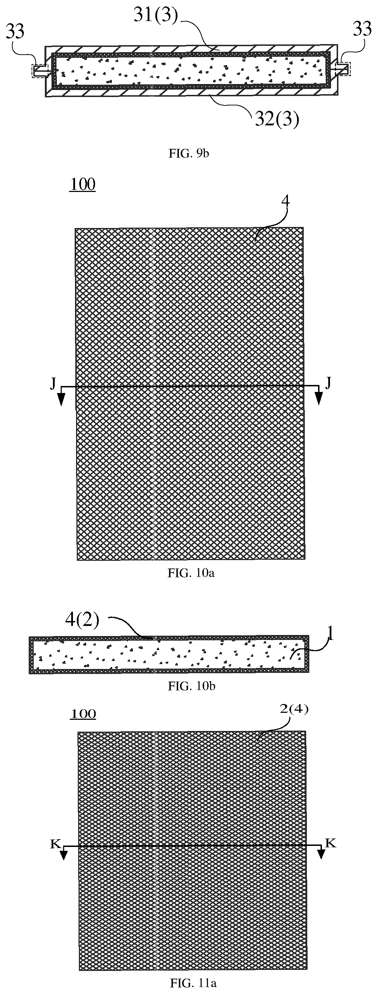

In some embodiments, the metal foil 2 does not form the sealing edge 33 extending beyond the thermal insulation layer 1, but the plastic encapsulating film 3 can include the sealing edge 33 extending beyond the thermal insulation layer 1. Referring to FIGS. 9a to 9b, FIG. 9a is a structural schematic view of the thermal insulation element in a seventh embodiment of the present disclosure, and FIG. 9b is a cross-sectional structural schematic view of the thermal insulation element shown in FIG. 9a along a I-I line. The structure of the thermal insulation element 100 in the seventh embodiment of the present disclosure is approximately the same as the structure of the thermal insulation element 100 in the third embodiment. The difference is that in the seventh embodiment, the plastic encapsulating film 3 includes the first plastic encapsulating sub-film 31 and the second plastic encapsulating sub-film 32. The first plastic encapsulating sub-film 31 covers the first surface 11 of the thermal insulation layer 1 and at least a part of each side surface of the thermal insulation layer 1. The second plastic encapsulating sub-film 32 covers the second surface 12 of the thermal insulation layer 1 and at least a part of each side surface of the thermal insulation layer 1. The edge of the first plastic encapsulating sub-film 31 and the edge of the second plastic encapsulating sub-film 32 are stacked and bonded together to form the sealing edge 33, and the closed space is formed to encapsulate the thermal insulation layer 1. Thus, the packaging process can be simplified and production efficiency can be improved.

In some embodiments, the first plastic encapsulating sub-film 31 can only cover the first surface 11 of the thermal insulation layer 1, and the second plastic encapsulating sub-film 32 can cover the second surface 12 of the thermal insulation layer 1 and entire side surface of the thermal insulation layer 1. Alternatively, the first plastic encapsulating sub-film 31 can cover the first surface 11 and entire side surface of the thermal insulation layer 1, and the second plastic encapsulating sub-film 32 only covers the second surface 12 of the thermal insulation layer 1.

The present embodiment provides the thermal insulation element 100. The thermal insulation element 100 includes the thermal insulation layer 1, the metal foil 2, and the plastic encapsulating film 3. The metal foil 2 is disposed on the surface of the thermal insulation layer 1. The plastic encapsulating film 3 is disposed on the surface of the thermal insulation layer 1 and/or the surface of the metal foil 2. The plastic encapsulating film 3 forms the closed space, or the plastic encapsulating film 3 cooperates with the metal foil 2 to form the closed space. By disposing the metal foil 2 on the surface of thermal insulation layer 1, it can prevent the plastic encapsulating film 3 from being in direct contact with the thermal insulation layer 1, thereby effectively preventing the liquid generated by the melting of the plastic encapsulating film 3 at the high temperature from infiltrating into thermal insulation layer 1 and preventing the formation of the thermal bridge, and the thermal bridge can affect the thermal insulation performance of the thermal insulation layer 1. Furthermore, the metal foil 2 can effectively prevent thermal infrared radiation, further improving the thermal insulation performance of the thermal insulation element 100. Compared with directly encapsulating the thermal insulation layer 1 with the plastic encapsulating film 3, the product is formed by disposing the metal foil 2 on the surface of the thermal insulation layer 1 and then encapsulating with the plastic encapsulating film 3, and the thermal insulation performance of the product at the high temperature is improved by 60%. On the other hand, above encapsulating method can also meet the insulation and voltage resistance requirements of the thermal insulation element 100 in the battery field.

The present disclosure further provides a method for making the thermal insulation element 100, and the method can be configured to prepare the thermal insulation element 100 of any one of the above embodiments. The method for making the thermal insulation element 100 includes the following operations.

In an operation S1, the method for making the thermal insulation element 100 can include providing the thermal insulation layer 1.

The thermal insulation layer 1 can include the aerogel composite layer or the thermal insulation film. The aerogel composite layer can be formed by compounding and pressing the aerogel and the fiber felt. The thermal insulation film can be formed by stirring and uniformly dispersing the thermal insulation nano-powders and the reinforcing fibers, and then pressing.

In an operation S2, the method for making the thermal insulation element 100 can include disposing the metal foil 2 on the surface of thermal insulation layer 1.

The thermal insulation layer 1 includes the first surface 11 and the second surface 12 that are opposite to each other. The metal foil 2 can be disposed on the first surface 11 and the second surface 12 of the thermal insulation layer 1 by pressing at a room temperature, and the room temperature ranges from 20°C to 25°C. The thickness of metal foil 2 is less than or equal to 0.1mm, and a pressure at the room temperature is less than or equal to 2MPa.

In an operation S3, the method for making the thermal insulation element 100 can include disposing the plastic encapsulating film 3 on the surface of the thermal insulation layer 1 and/or the surface of the metal foil 2, so as to wrap or encapsulate the thermal insulation layer 1 and/or the metal foil 2, wherein the plastic encapsulating film 3 forms the closed space, or the plastic encapsulating film 3 cooperates with the metal foil 2 to form the closed space.

The plastic encapsulating film 3 is an organic film, and can melt and generate the liquid at the high temperature greater than or equal to 200°C. In some embodiments, the plastic encapsulating film 3 is disposed on the surface of the thermal insulation layer 1 and/or the surface of the metal foil 2 by high-temperature pressing. A pressing temperature ranges from 80°C to 160°C, and a pressing pressure ranges from 0.5MPa to 20MPa.

In the method for making the thermal insulation element 100 in the present disclosure, the thermal insulation layer 1 is provided, and the metal foil 2 is disposed on the surface of thermal insulation layer 1. Then the plastic encapsulating film 3 is disposed on the surface of the thermal insulation layer 1 and/or the surface of the metal foil 2, so as to wrap or encapsulate the thermal insulation layer 1 and/or the metal foil 2. The plastic encapsulating film 3 forms the closed space, or the plastic encapsulating film 3 cooperates with the metal foil 2 to form the closed space. In the method, by disposing the metal foil 2 on the surface of thermal insulation layer 1, it can prevent the plastic encapsulating film 3 from being in direct contact with the thermal insulation layer 1, thereby effectively preventing the liquid generated by the melting of the plastic encapsulating film 3 at the high temperature from infiltrating into thermal insulation layer 1 and preventing the formation of the thermal bridge, and the thermal bridge can affect the thermal insulation performance of the thermal insulation layer 1. Furthermore, the metal foil 2 can effectively prevent thermal infrared radiation, further improving the thermal insulation performance of the thermal insulation element 100. Compared with directly encapsulating the thermal insulation layer 1 with the plastic encapsulating film 3, the product is formed by disposing the metal foil 2 on the surface of the thermal insulation layer 1 and then encapsulating with the plastic encapsulating film 3, and the thermal insulation performance of the product at the high temperature is improved by 60%.

Referring to FIGS. 10a-10b, FIG. 10a is a structural schematic view of the thermal insulation element in an eighth embodiment of the present disclosure, and FIG. 10b is a cross-sectional structural schematic view of the thermal insulation element shown in FIG. 10a along a A-A line. The present disclosure provides the thermal insulation element 100, and the thermal insulation element 100 can be applied to batteries or fields that do not require insulation and voltage resistance, such as buildings, so as to prevent thermal transfer. The thermal insulation element 100 includes the thermal insulation layer 1 and an encapsulating layer 4. Thermal insulation layer 1 is configured to prevent thermal transfer. The encapsulating layer 4 wraps the thermal insulation layer 1 and forms the closed space, so as to encapsulate the thermal insulation layer 1. The encapsulating layer 4 is configured to encapsulate the thermal insulation layer 1, so as to avoid the decrease of the thermal insulation performance that is caused by shedding powders of the thermal insulation layer 1, thereby effectively improving the thermal insulation performance of the thermal insulation element 100.

The encapsulating layer 4 includes the metal foil 2 and/or the plastic encapsulating film 3. In response to the encapsulating layer 4 only including the metal foil 2, and the thermal insulation element 100 is suitable for fields such as buildings that do not require insulation and voltage resistance. In response to the encapsulating layer 4 including the plastic encapsulating film 3, and the thermal insulation element 100 is suitable for fields such as batteries that require insulation and voltage resistance. The encapsulating layer 4 can only include the plastic encapsulating film 3, or the encapsulating layer 4 can also include the metal foil 2 and the plastic encapsulating film 3.

In some embodiments, the thermal insulation layer 1 can be the aerogel composite, and at least surface of the aerogel composite is grafted with the hydrophobic modifier, so as to improve the hydrophobic performance of the surface of the thermal insulation layer 1. The thickness of the aerogel composite can range from 0.09mm to 5mm. In some embodiments, the thickness of the aerogel composites can be 0.09mm, 0.1mm, 0.5mm, 0.9mm, 1.3mm, 1.7mm, 2mm, 2.5mm, 3mm, 3.5mm, 4mm, 4.5mm or 5mm, etc. In some embodiments, the thickness of the aerogel composite can range from 0.5mm to 2mm, so that the thermal insulation element 100 can be as thin as possible while maintaining excellent thermal insulation performance, thereby meeting the requirements of the growing high energy density and high volume assembly rate of the battery.

The encapsulating layer 4 can be the plastic encapsulating film 3, the plastic encapsulating film 3 is disposed on the surface of the aerogel composite and forms the closed space, so as to encapsulate the aerogel composite and prevent the aerogel composite from shedding powders. The thickness of the plastic encapsulating film 3 ranges from 0.01mm to 0.3mm. In some embodiments, the thickness of the plastic encapsulating film can be 0.01mm, 0.5mm, 0.15mm, 0.2mm, 0.25mm, or 0.3mm, etc. Those skilled in the art can understand that the aerogel composite is porous and at least surface of the aerogel composite includes pores. Since the surface of the aerogel composite is covered by the plastic encapsulating film 3, the liquid can be generated in the encapsulation process, and the liquid can also be generated by heated plastic encapsulating film 3 after the thermal insulation element 100 is applied into a thermal environment for thermal insulation. The liquid infiltrates into the pores of the aerogel composite, which can decrease the thermal insulation performance of the aerogel composite. It can significantly decrease the thermal insulation performance of the thin aerogel composite.

The hydrophobic modifier is grafted on at least the surface of the aerogel composite, it can prevent the liquid generated by the heated plastic encapsulating film 3 from infiltrating into the aerogel composite, and the formation of the thermal bridge in the aerogel composite and the decrease of the thermal insulation performance can be prevented. The hydrophobic modifier itself can also adapt to the high temperature, so it can avoid the effect of the plastic encapsulating film 3 covering the aerogel composite on the thermal insulation performance, so that the thermal insulation element 100 has excellent thermal insulation performance. The hydrophobic aerogel composite can be prepared by one-step hydrophobic method. The hydrophobic modifier is as described above and does not repeat here.

The diameters of the pores of at least the surface of the aerogel composite are less than or equal to 30nm. In some embodiments, the diameters of the pores can be 1nm, 10nm, 15nm, 20nm, 25nm, or 30nm, etc. The aerogel composite is controlled to have small pores, thereby further preventing the liquid generated by the plastic encapsulating film 3 in the encapsulation process from infiltrating into the pores, further decreasing the effect of the plastic encapsulating film 3 covering the aerogel composite on the thermal insulation performance, and further improving the thermal insulation performance of the thermal insulation element 100. However, if the pores are too small, there will too little air in the aerogel composite, which will result in poor thermal insulation performance. Thus, in some embodiments, the diameters of the pores of at least the surface of the aerogel composite range from 5nm to 30nm. In some embodiments, the diameters of the pores can be 5nm, 10nm, 15nm, 20nm, 25nm, or 30nm, etc.

The thickness of the aerogel composite ranges from 0.09mm to 2mm. The inventor finds the aerogel composite with the thickness of less than 2mm has a very significant decrease in the thermal insulation performance after being encapsulated by the plastic encapsulating film 3. The hydrophobic modifier is grafted on the surface of the aerogel composite, thereby preventing the infiltration of the liquid generated by the plastic encapsulating film 3 that is heated and melt during encapsulating the aerogel composite with the plastic encapsulating film 3 and after applying the encapsulated aerogel composite in the thermal environment for thermal insulation. Thus, the influence of the plastic encapsulating film 3 on the thermal insulation performance of the aerogel composite decreases, so as to further improve the thermal insulation performance of the thermal insulation element 100. The thermal insulation performance of the aerogel composite with the thickness of 0.09mm to 2mm has a significant increase.

At present, in the field of battery applications, the requirements for the thermal insulation performance of products are also increasing. Furthermore, as batteries become thinner, it is hoped that the materials used for thermal insulation can be as thin as possible. It is found that during using the battery, in response to the thickness of the aerogel composite for heat insulation in related art being less than 2mm, the plastic encapsulating film 3 in the thermal runaway heating environment of the battery can be heated and melted to generate liquid, so that liquid infiltration is performed, thereby leading to the significant decrease in the thermal insulation performance of the aerogel composite. Thus, encapsulating the aerogel composite with the thickness of less than 2mm cannot meet the demand of the battery for thermal insulation performance and the normal use of the battery. In the present disclosure, the thermal insulation performance of the aerogel composite can be significantly improved by grafting the hydrophobic modifier on the surface of the aerogel composite.

In some embodiments, the plastic encapsulating film 3 is disposed on an upper surface and/or a lower surface of the aerogel composite by a resin binder, and the resin binder is usually an epoxy resin binder. The hydrophobic modifier is grafted on the surface of the aerogel composite, thereby reducing the infiltration of the liquid generated by the resin binder that is heated and melt during encapsulating the aerogel composite with the plastic encapsulating film 3 and applying the encapsulated aerogel composite in the thermal environment for thermal insulation.

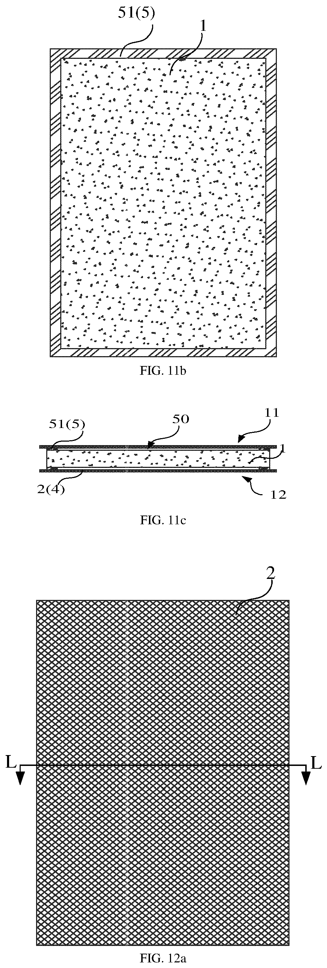

Referring to FIGS. 11a-11c, FIG. 11a is a structural schematic view of the thermal insulation element provided in a ninth embodiment of the present disclosure, FIG. 11b is a structural schematic view of a structure shown in FIG. 11a after removing an encapsulating layer, and FIG. 11c is a cross-sectional structural schematic view of the thermal insulation element shown in FIG. 11a along a B-B line. In some embodiments, the thermal insulation layer 1 can include the aerogel composite layer or the thermal insulation film. The aerogel composite layer can include the aerogel composite that is formed by compounding the aerogel and the fiber felt. The aerogel composite can also be formed by compounding the open pore macro-porous skeleton material and the aerogel. The thermal insulation film can include the thermal insulation nano-powders and the reinforcing fibers.

The encapsulating layer 4 can include the metal foil 2. It can prevent the liquid generated by melted the encapsulating layer 4 at the high temperature from infiltrating into the thermal insulation layer 1 and prevent the formation of the thermal bridge, thereby avoiding the decrease of the thermal insulation performance. The metal foil 2 can include one or more of the aluminum foil, the nickel foil, and the copper foil. In some embodiments, the metal foil 2 is the aluminum foil, the melting point of the aluminum foil is greater than 660°C, which can meet the melting point requirements of middle and low temperature thermal insulation element 100 applied to the battery. The aluminum foil can effectively prevent the thermal infrared radiation, thereby effectively improving the thermal insulation performance of the thermal insulation element 100. In addition, the aluminum foil has the lower cost, thereby effectively reducing production costs of the thermal insulation element 100. The metal foil 2 is fixed to the thermal insulation layer 1 through an adhesive layer 5. The adhesive layer 5 can be formed by hot pressing a thermoplastic adhesive mesh.

As shown in FIG. 11c, in the present embodiment, the thermal insulation layer 1 includes the first surface 11 and the second surface 12 opposite to each other. Each of the first surface 11 and the second surface 12 is provided with the adhesive layer 5 and the metal foil 2, and the metal foil 2 is disposed on a surface of the adhesive layer 5 away from the thermal insulation layer 1. The adhesive layer 5 can have an opening 50, so as to reduce the effect of the adhesive layer 5 on the thermal insulation performance of the thermal insulation layer 1. In addition, the edge of metal foil 2 can extend beyond the edge of thermal insulation layer 1, so that the side surfaces of thermal insulation layer 1 are spaced apart from the encapsulating layer 4 after encapsulating. The part of the thermal insulation layer 1 exposed from the opening 50 is spaced apart from the metal foil 2 to form a space filled with air. Due to the fact that air is a poor conductor of heat, it can effectively improve the thermal insulation performance of the thermal insulation element 100.

As shown in FIG. 11b, the adhesive layer 5 can be an adhesive frame 51 extending along the edge of the thermal insulation layer 1. The outer edge of the adhesive frame 51 can be flush with the edge of the thermal insulation layer 1, so as to prevent liquid infiltration from the edge of the thermal insulation layer 1. In some embodiments, the adhesive layer 5 can be disposed on the surface of the thermal insulation layer 1, and the adhesive layer 5 can be X-shaped or uniformly dispersed point like distribution, etc., as long as the adhesive layer 5 can stably fix the metal foil 2 to the surface of the thermal insulation layer 1. In some embodiments, the adhesive frame 51 covers 5-10% of the area of the thermal insulation layer 1, so that the metal foil 2 is fixed to the thermal insulation layer 1, as long as the adhesive layer 5 increases the thermal insulation performance of the thermal insulation layer 1 as less as possible.

In some embodiments, the encapsulating layer 4 may further include the plastic encapsulating film 3, and the plastic encapsulating film 3 covers the thermal insulation layer 1 and the metal foil 2. The plastic encapsulating film 3 forms the closed space, so as to encapsulate the thermal insulation layer 1. The metal foil 2 can prevent the liquid generated by the plastic encapsulating film 3 that is heated from infiltrating into the thermal insulation layer 1, thereby preventing the formation of the thermal bridge in thermal insulation layer 1 and effectively improving the thermal insulation performance of the thermal insulation element 100. The plastic encapsulating film 3 may include the organic film that can melt and generate the liquid at the high temperature. The material of the organic film can include any one or more of polyester, polyimide, polyvinyl chloride, polyethylene, polypropylene, and polycarbonate.

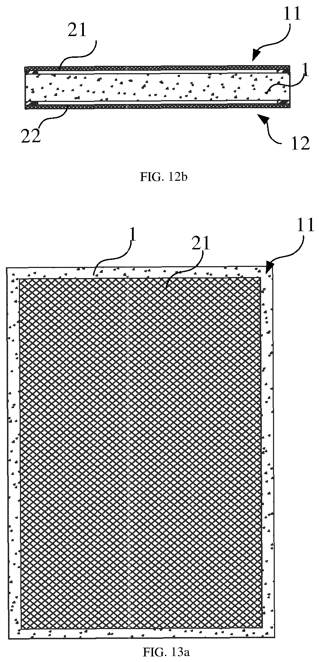

Referring to FIGS. 12a-12b, FIG. 12a is a structural schematic view of the thermal insulation element after removing the plastic encapsulating film in the tenth embodiment of the present disclosure, and FIG. 12b is a cross-sectional structural schematic view of a structure shown in FIG. 12a along a C-C line. The structure of the thermal insulation element 100 in the tenth embodiment of the present disclosure is approximately the same as the structure of the thermal insulation element 100 in the second embodiment. The difference is that in the tenth embodiment, the metal foil 2 includes and only includes a first metal sub-foil 21 disposed on the first surface 11 and a second metal sub-foil 22 disposed on the second surface 12. An edge of the first metal sub-foil 21 can be flush with an edge of the first surface 11, and an edge of the second metal sub-foil 22 can also be flush with an edge of the second surface 12. Those of ordinary skill in the art can understand that if the first metal sub-foil 21 extends beyond the first surface 11 of the thermal insulation layer 1, and the second metal sub-foil 22 extends beyond the second surface 12 of the thermal insulation layer 1, a part of the first metal sub-foil 21 extending beyond the first surface 11 of the thermal insulation layer 1 and a part of the second metal sub-foil 22 extending beyond the second surface 12 of the thermal insulation layer 1 can form protruding metal foil edges, and the protruding metal foil edges can adversely affect the performance of the thermal insulation element 100. However, in the present embodiment, the first metal sub-foil 21 and the second metal sub-foil 22 do not form the protruding metal foil edges. Thus, on the one hand, it can avoid adverse effects on the thermal insulation performance of the thermal insulation element 100. On the other hand, the first surface 11 and the second surface 12 of the thermal insulation layer 1 are completely covered by the first metal sub-foil 21 and the second metal sub-foil 22, thereby preventing the liquid generated by the melting of the plastic encapsulating film 3 from infiltrating into the thermal insulation layer 1.

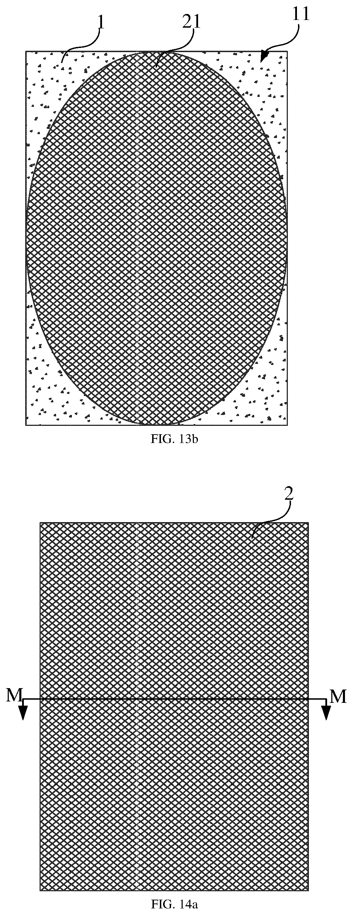

Referring to FIGS. 13a and 13b, FIG. 13a is a structural schematic view of the thermal insulation element after removing the plastic encapsulating film in another embodiment of the present disclosure, and FIG. 13b is a structural schematic view of the thermal insulation element after removing the plastic encapsulating film in another embodiment of the present disclosure. In some embodiments, the structure of the thermal insulation element 100 is approximately the same as the structure of the thermal insulation element 100 in the tenth embodiment. The difference is that in some embodiments, the edge of the first metal sub-foil 21 can be spaced apart from (as shown in FIG. 13a) or tangent to the edge of the first surface 11 (as shown in FIG. 13b), and the edge of the second metal sub-foil 22 can also be spaced apart from or tangent to the edge of the second surface 12. In some embodiments, a shape and a size of the first metal sub-foil 21 are different from a shape and a size of the second metal sub-foil 22. In some embodiments, the edge of the first metal sub-foil 21 is flush with the edge of the first surface 11, and the edge of the second metal sub-foil 22 is spaced apart from the edge of the second surface 12.

In some embodiments, the first metal sub-foil 21 can cover 90%-100% of an area of the first surface 11, and/or the second metal sub-foil 22 can cover 90%-100% of an area of the second surface 12. The metal foil 2 covers the surface of the thermal insulation layer 1 as much as possible, so as to prevent the liquid generated by the plastic encapsulating film 3 from infiltrating into the thermal insulation layer 1 at the high temperature.

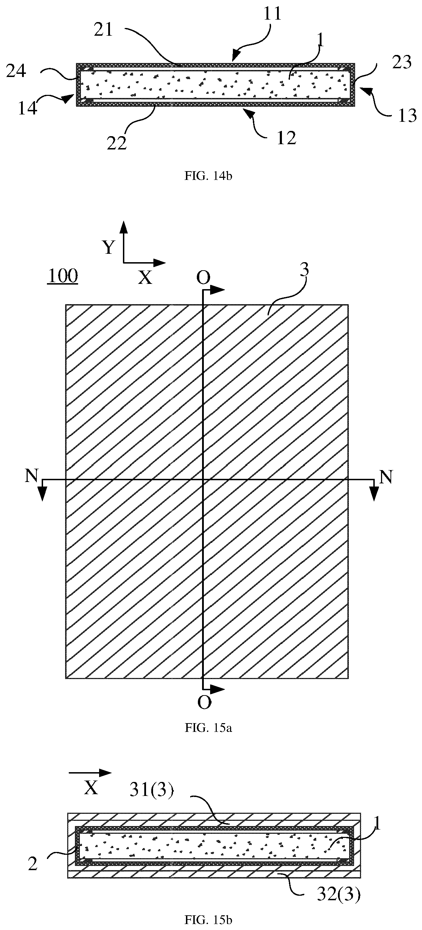

Referring to FIGS. 14a to 14b, FIG. 14a is a structural schematic view of the thermal insulation element after removing the plastic encapsulating film in the eleventh embodiment of the present disclosure, and FIG. 14b is a cross-sectional structural schematic view of the structure shown in FIG. 14a along a D-D line. The structure of the thermal insulation element in the eleventh embodiment of the present disclosure is approximately the same as the structure of the thermal insulation element 100 in the tenth embodiment. The difference is that in the eleventh embodiment, the thermal insulation layer 1 further includes a first side surface 13 that is connected to the first surface 11 and the second surface 12. The first side surface 13 is a side surface corresponding to a long side of the thermal insulation layer 1. The metal foil 2 further includes a third metal sub-foil 23 disposed on the first side surface 13, so as to increase the area of the thermal insulation layer 1 covered by the metal foil 2, further improving the thermal insulation performance of the thermal insulation element 100. In some embodiments, the first side surface 13 may also be a side surface corresponding to a short side of the thermal insulation layer 1.

In the present embodiment, the first metal sub-foil 21, the second metal sub-foil 22, and the third metal sub-foil 23 are formed by folding the same metal foil 2, so as to cover the first surface 11, the second surface 12, and the first side surface 13 of the thermal insulation layer 1. It is easier to position the first metal sub-foil 21 on the first surface 11, the second metal sub-foil 22 on the second surface 12, and the third metal sub-foil 23 on the first side surface 13, making the operations in the production process simpler and more convenient, thereby improving production efficiency.

Referring to FIG. 14b, the thermal insulation layer 1 further includes a second side surface 14 that is connected to the first surface 11 and the second surface 12 and is opposite to the first side surface 13. The metal foil 2 further includes a fourth metal sub-foil 24 disposed on the second side surface 14, so as to further increase the area of the thermal insulation layer 1 covered by the metal foil 2 and improve the thermal insulation performance of the thermal insulation element 100. The first metal sub-foil 21, the second metal sub-foil 22, the third metal sub-foil 23, and the fourth metal sub-foil 24 are formed by folding the same metal foil 2, so as to cover the first surface 11, the second surface 12, the first side surface 13, and the second side surface 14 of the thermal insulation layer 1, thereby preventing the metal foil 2 from shifting relative to the thermal insulation layer 1 and further preventing the decrease of the thermal insulation performance of the thermal insulation element 100. It can also make the positioning of the metal foil 2 and the thermal insulation layer 1 easier, so as to improve production efficiency.

In some embodiments, neither the metal foil 2 nor the plastic encapsulating film 3 forms a sealing edge 33 extending beyond the thermal insulation layer 1, so as to prevent the sealing edge 33 from conducting heat that affects the thermal insulation performance.

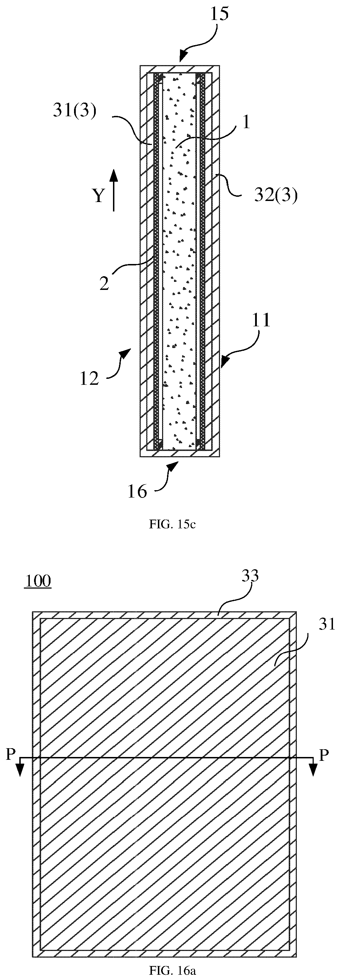

Referring to FIGS. 15a to 15c, FIG. 15a is a structural schematic view of the thermal insulation element in the twelfth embodiment of the present disclosure, FIG. 15b is a cross-sectional structural schematic view of the thermal insulation element shown in FIG. 15a along a E-E line, and FIG. 15c is a cross-sectional structural schematic view of the thermal insulation element shown in FIG. 15a along a F-F line. The structure of the thermal insulation element 100 in the twelfth embodiment of the present disclosure is approximately the same as the structure of the thermal insulation element 100 in the eleventh embodiment. The difference is that in the twelfth embodiment, the plastic encapsulating film 3 includes a first plastic encapsulating sub-film 31 and a second plastic encapsulating sub-film 32. Referring to FIG. 15a and FIG. 15b, the first plastic encapsulating sub-film 31 is folded along a first direction X to form a first hollow cylindrical shape, and the first hollow cylindrical shape wraps the thermal insulation layer 1 and the metal foil 2 by 360 degrees. The first plastic encapsulating sub-film 31 is disposed on the metal foil 2.

Referring to FIG. 15c, the thermal insulation layer 1 further includes a third side surface 15 that is connected to the first surface 11 and the second surface 12, and a fourth side surface 16 opposite to the third side surface 15. The second plastic encapsulating sub-film 32 is folded along a second direction Y to form a second hollow cylindrical shape, and the second hollow cylindrical shape wraps the thermal insulation layer 1 and the metal foil 2. The second plastic encapsulating sub-film 32 covers the third side surface 15 and the fourth side surface 16 of the thermal insulation layer 1, and the parts of the first plastic encapsulating sub-film 31 disposed on the first surface 11 and the second surface 12. The second direction Y is perpendicular to the first direction X. Thus, the first plastic encapsulating sub-film 31 and the second plastic encapsulating sub-film 32 cooperate to form the closed space, so as to encapsulate the thermal insulation layer 1, thereby avoiding adverse effects caused by shedding powders of the thermal insulation layer 1.

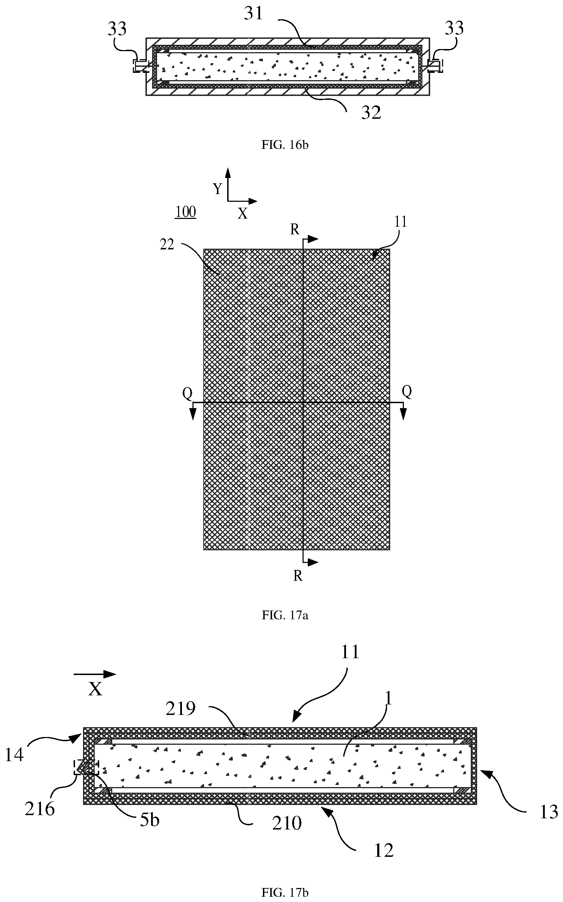

In some embodiments, the metal foil 2 does not form the sealing edge 33 extending beyond the thermal insulation layer 1, but the plastic encapsulating film 3 can include the sealing edge 33 extending beyond the thermal insulation layer 1. Referring to FIGS. 16a-16b, FIG. 16a is a structural schematic view of the thermal insulation element in the thirteenth embodiment of the present disclosure, and FIG. 16b is a cross-sectional structural schematic view of the thermal insulation element shown in FIG. 16a along a G-G line. The structure of the thermal insulation element 100 in the thirteenth embodiment of the present disclosure is approximately the same as the structure of the thermal insulation element 100 in the eleventh embodiment. The difference is that in the thirteenth embodiment, the plastic encapsulating film 3 includes the first plastic encapsulating sub-film 31 and the second plastic encapsulating sub-film 32. The first plastic encapsulating sub-film 31 covers the first surface 11 of the thermal insulation layer 1 and at least a part of each side surface of the thermal insulation layer 1. The second plastic encapsulating sub-film 32 covers the second surface 12 of the thermal insulation layer 1 and at least a part of each side surface of the thermal insulation layer 1. The edge of the first plastic encapsulating sub-film 31 and the edge of the second plastic encapsulating sub-film 32 are stacked and bonded together to form the sealing edge 33, and the closed space is formed to encapsulate the thermal insulation layer 1. Thus, the packaging process can be simplified and production efficiency can be improved.

In some embodiments, the first plastic encapsulating sub-film 31 can only cover the first surface 11 of the thermal insulation layer 1, and the second plastic encapsulating sub-film 32 can cover the second surface 12 of the thermal insulation layer 1 and entire side surface of the thermal insulation layer 1. Alternatively, the first plastic encapsulating sub-film 31 can cover the first surface 11 and entire side surface of the thermal insulation layer 1, and the second plastic encapsulating sub-film 32 only covers the second surface 12 of the thermal insulation layer 1.

In some embodiments, the encapsulating layer 4 of the thermal insulation element 100 may also only include the metal foil 2, and the metal foil 2 wraps the thermal insulation layer 1 and forms the closed space to encapsulate the thermal insulation layer 1.

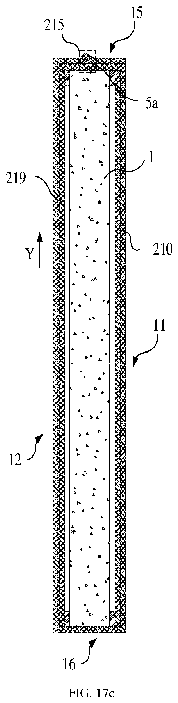

Referring to FIGS. 17a-17c, FIG. 17a is a structural schematic view of the thermal insulation element in a fourteenth embodiment of the present disclosure, FIG. 17b is a cross-sectional structural schematic view of the thermal insulation element shown in FIG. 17a along a H-H line, and FIG. 17c is a cross-sectional structural schematic view of the thermal insulation element shown in FIG. 17a along a I-I line. The structure of the thermal insulation element 100 in the fourteenth embodiment of the present disclosure is approximately the same as the structure of the thermal insulation element 100 in the ninth embodiment. The difference is that in the fourteenth embodiment, the metal foil 2 may include a first metal foil 29 and a second metal foil 20.

Referring to FIGS. 17a and 17b, the thermal insulation layer 1 further includes the first side surface 13 that is connected to the first surface 11 and the second surface 12, and the second side surface 14 opposite to the first side surface 13. The first metal foil 29 is folded along the first direction X to form the first hollow cylindrical shape and wraps the thermal insulation layer 1 by 360 degrees. The first metal foil 29 covers the first surface 11, the second surface 12, the first side surface 13, and the second side surface 14 of the thermal insulation layer 1. Referring to FIG. 17c, the thermal insulation layer 1 further includes the third side surface 15 that is connected to the first surface 11 and the second surface 12, and the fourth side surface 16 opposite to the third side surface 15. The second metal foil 20 is folded along the second direction Y to form the second hollow cylindrical shape and wraps the thermal insulation layer 1 and the first metal foil 29 by 360 degrees. The second metal foil 20 covers the third side surface 15 and the fourth side surface 16 of the thermal insulation layer 1, and parts of the first metal foil 29 disposed on the first surface 11 and the second surface 12 of the thermal insulation layer 1. The second direction Y is perpendicular to the first direction X. Thus, the first metal foil 29 and the second metal foil 20 cooperate to form the closed space to encapsulate the thermal insulation layer 1, so as to prevent the thermal insulation layer 1 from shedding powders, thereby avoiding adverse effects caused by shedding powders of the thermal insulation layer 1 on the performance of the thermal insulation element 100.

The metal foil 2 covers all surfaces of the thermal insulation layer 1, it effectively prevents the liquid generated by the melting of the plastic encapsulating film 3 at the high temperature from infiltrating into the thermal insulation layer 1 and prevents the formation of the thermal bridge, thereby improving the thermal insulation performance of the thermal insulation element 100.

As shown in FIG. 17c, two opposite sides of the second metal foil 20 can be partially overlapped after folding to form the overlapping area, and the overlapping area is fixed by using a first adhesive layer 5a, so as to prevent the second metal foil 20 from falling off from the thermal insulation layer 1. In some embodiments, the second metal foil 20 can further includes at least one first pleat 215 in the overlapping area, so that the two opposite sides of the second metal foil 20 is connected to each other in the overlapping area to wrap the thermal insulation layer 1. In some embodiments, the first adhesive layer 5a can also be disposed on the first pleat 215, so as to ensure that the second metal foil 20 is enclosed in the overlapping area. As shown in FIG. 17b, the two opposite sides of the first metal foil 29 can also be partially overlapped after folding to form the overlapping area, and at least one second pleat 216 can be formed in the overlapping area, and the second adhesive layer 5b is disposed on the second pleat 216, so that the second metal foil 20 is enclosed to wrap the thermal insulation layer 1 in the overlapping area. In some embodiments, each of the first adhesive layer 5a, the first pleat 215, the second adhesive layer 5b, and the second pleat 216 can be formed on the side surface of the thermal insulation layer 1, so as to reduce the thickness of the thermal insulation element 100. In addition, each of the first adhesive layer 5a and the second adhesive layer 5b are located on the side surface of the thermal insulation layer 1, which can also decrease the effect of the adhesive layer 5 on the thermal insulation performance of the thermal insulation layer 1.

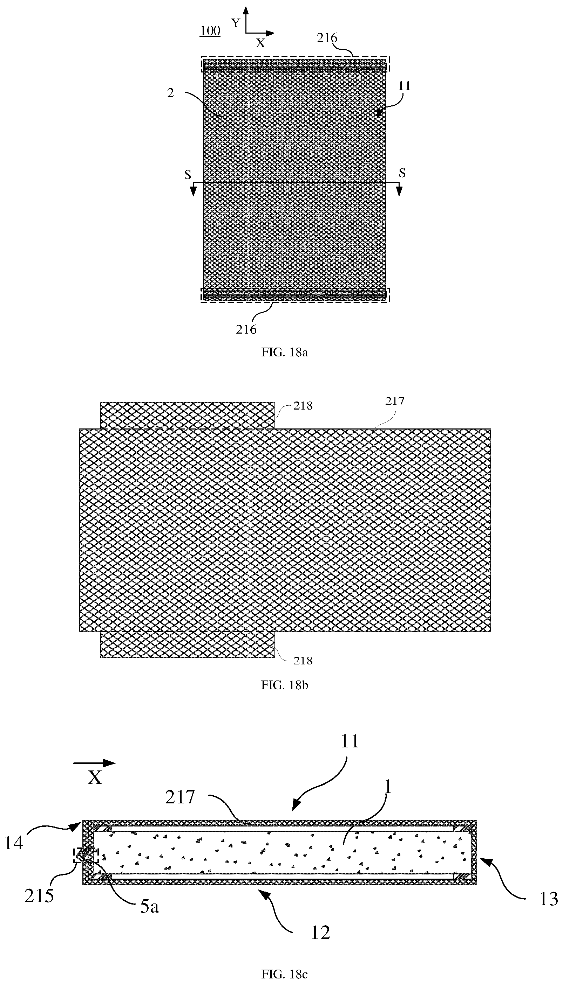

Referring to FIGS. 18a-18c, FIG. 18a is a structural schematic view of the thermal insulation element in a fifteenth embodiment of the present disclosure, FIG. 18b is a structural schematic view of a metal foil of the thermal insulation element shown in FIG. 18a before folding, and FIG. 18c is a cross-sectional structural schematic view of the thermal insulation element shown in FIG. 18a along a J-J line. The structure of the thermal insulation element 100 in the fifteenth embodiment of the present disclosure is approximately the same as the structure of the thermal insulation element 100 in the fourteenth embodiment. The difference is that in the fifteenth embodiment, the number of metal foils 2 is one.

As shown in FIG. 18b, the metal foil 2 includes a main body 217 and extension parts 218 that are connected to sides of the main body 217. In some embodiments, the number of extension parts 218 is two. The main body 217 includes two opposite sides, one extension part 218 is connected to one of the two opposite sides, and another extension part 218 is connected to another of the two opposite sides. The extension part 218 can be connected to a part of the main body 217 on the first surface 11 or the second surface 12 of the thermal insulation layer 1. In the present embodiment, the extension part 218 is connected to a part of the main body 217 on the second surface 12 of the thermal insulation layer 1, and the main body 217 and the extension parts 218 are integrated.

Referring to FIG. 18c, the main body 217 is folded along the first direction X to form the first hollow cylindrical shape and wraps the thermal insulation layer 1. The main body 217 covers the first surface 11, the second surface 12, the first side surface 13, and the second side surface 14 of the thermal insulation layer 1. The two opposite sides of the main body 217 can be partially overlapped after folding to form the overlapping area, and at least one first pleat 215 is formed in the overlapping area. The first pleat 215 is provided with the first adhesive layer 5a, so that the main body 217 is enclosed to wrap the thermal insulation layer 1 in the overlapping area. In the present embodiment, the first pleat 215 and the first adhesive layer 5a are disposed on the side surface corresponding to the long side of the thermal insulation layer 1. That is, the first pleat 215 and the first adhesive layer 5a are disposed on the first side surface 13 or the second side surface 14 of the thermal insulation layer 1, so as to reduce the thickness of the thermal insulation element 100, and the effect of the first adhesive layer 5a on the thermal insulation performance can be reduced. In some embodiments, the first pleat 215 and the first adhesive layer 5a can also be disposed on the side surface corresponding to the short side of the thermal insulation layer 1.

As shown in FIG. 18a, the extension part 218 is folded along the second direction Y and covers the third side surface 15 and the fourth side surface 16 of the thermal insulation layer 1. The extension part 218 cooperates with the main body 217 to form the closed space, so as to encapsulate the thermal insulation layer 1, thereby preventing adverse effects on the performance of the thermal insulation element 100 caused by shedding powders of the thermal insulation layer 1. The second direction Y is perpendicular to the first direction X.

A free end of each extension part 218 can form the second pleat 216 on the first surface 11 or the second surface 12 of the thermal insulation layer 1, and the second pleat 216 is provided with the second adhesive layer 5b. Thus, the extension part 218 and the main body 217 form the closed space to wrap the thermal insulation layer 1. In the present embodiment, the second pleat 216 and the second adhesive layer 5b are both located on the first surface 11 of the thermal insulation layer 1.

In some embodiments, the thickness of the thermal insulation element 100 is less than or equal to 3mm, so that the metal foil 2 can effectively improve the thermal insulation performance of the thermal insulation element 100 after being disposed on the surface of the thermal insulation layer 1. In some embodiments, the thickness of thermal insulation element 100 can be 0.5mm, 1.0mm, 1.5mm, 2.0mm, or 3.0mm, etc. Those of ordinary skill in the art can understand that during directly encapsulating a thicker thermal insulation layer 1 with the plastic encapsulating film 3, the liquid generated by the melting of the plastic encapsulating film 3 at the high temperature can infiltrate into the pores of the thermal insulation layer 1. However, because the thermal insulation layer 1 is relatively thick, the liquid formed by melted plastic encapsulating film 3 cannot infiltrate into the thermal insulation layer 1 to form the thermal bridge, and the plastic encapsulating film 3 does not significantly affect the thermal insulation performance of the thermal insulation layer 1. However, for ultra-thin thermal insulation layer 1, such as the thermal insulation layer 1 with a thickness less than 3mm, the inventor finds that the thermal insulation performance of the thermal insulation layer 1 at the high temperature can significantly decrease after directly encapsulating the thermal insulation layer 1 with the plastic encapsulating film 3, thereby making the thermal insulation element 100 unable to meet the thermal insulation performance requirements of the product. Thus, disposing the metal foil 2 on the surface of the thermal insulation layer 1 and then encapsulating with the plastic encapsulating film 3 can significantly improve the thermal insulation performance of the ultra-thin thermal insulation layer 1.

In some embodiments, the thickness of the thermal insulation element 100 can be less than or equal to 1.2mm, so as to improve the thermal insulation performance of the thermal insulation element 100 by disposing the metal foil 2 on the thermal insulation element 100. In some embodiments, the thickness of the thermal insulation element 100 can be 0.1mm, 0.3mm, 0.5mm, 1.0mm, or 1.2mm, etc. In some embodiments, the thickness of the thermal insulation layer 1 is less than or equal to 1.0mm, such as 0.1mm, 0.3mm, 0.5mm, 0.8mm, or 1.0mm, etc. In some embodiments, the thickness of the metal foil 2 is greater than or equal to 0.01 mm and less than or equal to 0.1 mm, such as 0.01mm, 0.03mm, 0.05mm, 0.08mm, or 0.1mm, etc. In some embodiments, the thickness of the plastic encapsulating film 3 is greater than or equal to 0.01 mm and less than or equal to 0.3 mm, such as 0.05mm, 0.1mm, 0.15mm, 0.2mm, or 0.3mm, etc.

The embodiments of the present disclosure provide the thermal insulation element 100. The thermal insulation element 100 includes the thermal insulation layer 1 and the encapsulating layer 4. The encapsulating layer 4 forms the closed space to wrap or encapsulate the thermal insulation layer 1. By disposing the thermal insulation layer 1 with hydrophobic function and/or encapsulating the thermal insulation layer 1 with the encapsulating layer 4, it can prevent the liquid generated by the melting of the encapsulating layer 4 at the high temperature, or the liquid generated by the encapsulating layer 4 at the high temperature from infiltrating into the thermal insulation layer 1, thereby preventing the formation of the thermal bridge inside thermal insulation layer 1. Thus, affecting the performance of the thermal insulation element 100 can be avoided, and the thermal insulation performance of the thermal insulation element 100 can be effectively improved.

For those skilled in the art, it is clear that the present disclosure is not limited to the details of the above-mentioned exemplary embodiments. The present disclosure can be realized in other concrete forms without departing from the spirit or essential features of the present disclosure. Thus, the embodiments should be regarded as exemplary and non-restrictive in any respect, and the scope of the present disclosure is limited by the appended claims rather than by the above description. Thus, the aim is to include all changes within the meaning and scope of the equivalent elements of the claims in this application. Any reference numerals in the claims should not be regarded as limiting the claims involved.

The above descriptions are only some embodiments of the present disclosure, and are not intended to limit the scope of the present disclosure. Any equivalent structure or equivalent flow transformation made by using the contents of the specification and accompanying drawings of the present disclosure, or directly or indirectly applied to other related technical fields, is included in the scope of the patent protection of the present disclosure.

## Claims

1. A thermal insulation element (100), comprising:
a thermal insulation layer (1); and
an encapsulating layer (4); wherein the encapsulating layer (4) wraps the thermal insulation layer (1) and forms a closed space;
**characterized in that** the encapsulating layer (4) comprises:
a metal foil (2), disposed on a surface of the thermal insulation layer (1); and
a plastic encapsulating film (3), disposed on the surface of the thermal insulation layer (1) and/or a surface of the metal foil (2); wherein the plastic encapsulating film (3) forms the closed space to encapsulate both the thermal insulation layer (1) and the metal foil (2), or the plastic encapsulating film (3) cooperates with the metal foil (2) to form the closed space to encapsulate the thermal insulation layer (1).

2. The thermal insulation element (100) according to claim 1, wherein
the thermal insulation layer (1) comprises a first surface (11) and a second surface (12) opposite to each other, and the metal foil (2) comprises a first metal sub-foil (21) disposed on the first surface (11) and a second metal sub-foil (22) disposed on the second surface (12); an edge of the first metal sub-foil (21) is flush with, spaced apart from, or tangent to an edge of the first surface (11); and/or, an edge of the second metal sub-foil (22) is flush with, spaced apart from, or tangent to an edge of the second surface (12).

3. The thermal insulation element (100) according to claim 2, wherein,
the thermal insulation layer (1) further comprises a first side surface (13) that is connected to the first surface (11) and the second surface (12), and the metal foil (2) further comprises a third metal sub-foil (23) disposed on the first side surface (13); the first metal sub-foil (21) covers 90%-100% of an area of the first surface (11); and/or
the thermal insulation layer (1) further comprises a second side surface (14) that is connected to the first surface (11) and the second surface (12), the second side surface (14) is opposite to the first side surface (13), and the metal foil (2) further comprises a fourth metal sub-foil (24) disposed on the second side surface (14); the second metal sub-foil (22) covers 90%-100% of an area of the second surface (12).

4. The thermal insulation element (100) according to claim 1, wherein the metal foil (2) is free of a sealing edge (33) extending beyond the thermal insulation layer (1).

5. The thermal insulation element (100) according to claim 4, wherein the plastic encapsulating film (3) forms the closed space; and
the plastic encapsulating film (3) comprises a first plastic encapsulating sub-film (31) and a second plastic encapsulating sub-film (32), the first plastic encapsulating sub-film (31) is folded along a first direction (X) and wraps the thermal insulation layer (1) and the metal foil (2) by 360 degrees, the second plastic encapsulating sub-film (32) is folded along a second direction (Y) and wraps the thermal insulation layer (1) and the metal foil (2) by 360 degrees, the second direction (Y) is perpendicular to the first direction (X), the first direction (X) and the second direction (Y) are parallel to the thermal insulation layer (1), and the plastic encapsulating film (3) is free of the sealing edge (33) extending beyond the thermal insulation layer (1).

6. The thermal insulation element (100) according to claim 4, wherein the plastic encapsulating film (3) cooperates with the metal foil (2) to form the closed space;
the metal foil (2) is folded along a first direction (X) and wraps the thermal insulation layer (1) by 360 degrees, the plastic encapsulating film (3) is folded along a second direction (Y) and wraps the thermal insulation layer (1) and the metal foil (2) by 360 degrees, the second direction (Y) is perpendicular to the first direction (X), the first direction (X) and the second direction (Y) are parallel to the thermal insulation layer (1), and the plastic encapsulating film (3) is free of the sealing edge (33) extending beyond the thermal insulation layer (1);
two opposite sides of the metal foil (2) partially overlap to form an overlapping area, and the two opposite sides of the metal foil (2) form at least one pleat (25) in the overlapping area; and
the at least one pleat (25) is disposed on a side surface of the thermal insulation layer (1).

7. The thermal insulation element (100) according to claim 4, wherein the plastic encapsulating film (3) forms the closed space;
the metal foil (2) is folded to form a hollow cylindrical shape and wraps the thermal insulation layer (1) by 360 degrees, two opposite sides of the metal foil (2) partially overlap to form an overlapping area, and the two opposite sides of the metal foil (2) form at least one pleat (25) in the overlapping area; and
the at least one pleat (25) is disposed on a side surface of the thermal insulation layer (1).

8. The thermal insulation element (100) according to claim 4, wherein the plastic encapsulating film (3) forms the closed space, and the plastic encapsulating film (3) comprises a first plastic encapsulating sub-film (31) and a second plastic encapsulating sub-film (32); the first plastic encapsulating sub-film (31) covers the first surface (11) of the thermal insulation layer (1) and covers at least one part of each side surface of the thermal insulation layer (1), and the second plastic encapsulating sub-film (32) covers the second surface (12) of the thermal insulation layer (1) and covers at least one part of each side surface of the thermal insulation layer (1); and an edge of the first plastic encapsulating sub-film (31) and an edge of the second plastic encapsulating sub-film (32) are stacked and bonded together to form the sealing edge (33) and the closed space, so that the thermal insulation layer (1) is encapsulated.

9. The thermal insulation element (100) according to any one of claims 1 to 8, wherein
at least surface of the thermal insulation layer (1) is grafted with a hydrophobic modifier.
a thickness of the thermal insulation element (100) is less than or equal to 1.2mm;
a thickness of the thermal insulation layer (1) is less than or equal to 1.0mm;
the thickness of the metal foil (2) is greater than or equal to 0.01 mm and less than or equal to 0.1mm; and
a thickness of the plastic encapsulating film (3) is greater than or equal to 0.01mm and less than or equal to 0.3mm.

10. The thermal insulation element (100) according to any one of claims 1 to 9, further comprising an adhesive layer, wherein the metal foil is fixed to the thermal insulation layer through the adhesive layer.

11. The thermal insulation element (100) according to claim 10, wherein
the adhesive layer is an adhesive frame extending along an edge of the thermal insulation layer; and/or
an outer edge of the adhesive layer is flush with an edge of the thermal insulation layer; and/or
the adhesive layer covers 5%-10% of an area of the thermal insulation layer.

12. The thermal insulation element (100) according to claim 10, wherein
the metal foil (2) is folded to form a hollow cylindrical shape and wraps the thermal insulation layer (1) by 360 degrees, two opposite sides of the metal foil (2) partially overlap to form an overlapping area, the two opposite sides of the metal foil (2) form at least one pleat (25) in the overlapping area, and the adhesive layer is located at the pleat (25).

13. The thermal insulation element (100) according to any one of claims 1 to 12, wherein
the thermal insulation layer (1) comprises an aerogel composite layer or a thermal insulation film comprising thermal insulation nano-powders and reinforcing fibers;
the metal foil (2) comprises one or more of aluminum foil, nickel foil, and copper foil;
a thickness of the thermal insulation element (100) is less than or equal to 1.2mm;
a thickness of the thermal insulation layer (1) is less than or equal to 1.0mm;
the thickness of the metal foil (2) is greater than or equal to 0.01 mm and less than or equal to 0.1mm; and
at least surface of the thermal insulation layer (1) is grafted with a hydrophobic modifier.

## Patentansprüche

1. Ein Wärmedämmelement (100), umfassend:
eine Wärmedämmschicht (1); und
eine Kapselschicht (4),
wobei die Kapselschicht (4) die Wärmedämmschicht (1) umgibt und einen geschlossenen Raum bildet;
**dadurch gekennzeichnet, dass** die Kapselschicht (4) umfasst:
eine Metallfolie (2), die auf einer Oberfläche der Wärmedämmschicht (1) angeordnet ist; und
eine Kunststoff-Kapselfolie (3), die auf der Oberfläche der Wärmedämmschicht (1) und/oder auf einer Oberfläche der Metallfolie (2) angeordnet ist,
wobei die Kunststoff-Kapselfolie (3) den geschlossenen Raum bildet, um sowohl die Wärmedämmschicht (1) als auch die Metallfolie (2) zu kapseln, oder wobei die Kunststoff-Kapselfolie (3) mit der Metallfolie (2) zusammenwirkt, um den geschlossenen Raum zu bilden, der die Wärmedämmschicht (1) kapselt.

2. Wärmedämmelement (100) gemäß Anspruch 1,
wobei die Wärmedämmschicht (1) eine erste Oberfläche (11) und eine zweite Oberfläche (12) aufweist, die einander gegenüberliegen, und die Metallfolie (2) eine erste Metall-Teilfolie (21) umfasst, die auf der ersten Oberfläche (11) angeordnet ist, und eine zweite Metall-Teilfolie (22), die auf der zweiten Oberfläche (12) angeordnet ist;
wobei ein Rand der ersten Metall-Teilfolie (21) bündig mit einem Rand der ersten Oberfläche (11) ist, von diesem beabstandet ist oder zu diesem tangential ist; und/oder
wobei ein Rand der zweiten Metall-Teilfolie (22) bündig mit einem Rand der zweiten Oberfläche (12) ist, von diesem beabstandet ist oder zu diesem tangential ist.

3. Wärmedämmelement (100) gemäß Anspruch 2,
wobei die Wärmedämmschicht (1) ferner eine erste Seitenoberfläche (13) aufweist, die mit der ersten Oberfläche (11) und der zweiten Oberfläche (12) verbunden ist, und die Metallfolie (2) ferner eine dritte Metall-Teilfolie (23) umfasst, die auf der ersten Seitenoberfläche (13) angeordnet ist;
wobei die erste Metall-Teilfolie (21) 90 % bis 100 % einer Fläche der ersten Oberfläche (11) bedeckt; und/oder
wobei die Wärmedämmschicht (1) ferner eine zweite Seitenoberfläche (14) aufweist, die mit der ersten Oberfläche (11) und der zweiten Oberfläche (12) verbunden ist, wobei die zweite Seitenoberfläche (14) der ersten Seitenoberfläche (13) gegenüberliegt, und die Metallfolie (2) ferner eine vierte Metall-Teilfolie (24) umfasst, die auf der zweiten Seitenoberfläche (14) angeordnet ist;
wobei die zweite Metall-Teilfolie (22) 90 % bis 100 % einer Fläche der zweiten Oberfläche (12) bedeckt.

4. Wärmedämmelement (100) gemäß Anspruch 1, wobei die Metallfolie (2) frei von einem Dichtungsrand (33) ist, der sich über die Wärmedämmschicht (1) hinaus erstreckt.

5. Wärmedämmelement (100) gemäß Anspruch 4, wobei die Kunststoff-Kapselfolie (3) den geschlossenen Raum bildet; und
wobei die Kunststoff-Kapselfolie (3) eine erste Kunststoff-Kapselteilfolie (31) und eine zweite Kunststoff-Kapselteilfolie (32) umfasst, wobei die erste Kunststoff-Kapselteilfolie (31) entlang einer ersten Richtung (X) gefaltet ist und die Wärmedämmschicht (1) und die Metallfolie (2) um 360 Grad umhüllt, wobei die zweite Kunststoff-Kapselteilfolie (32) entlang einer zweiten Richtung (Y) gefaltet ist und die Wärmedämmschicht (1) und die Metallfolie (2) um 360 Grad umhüllt, wobei die zweite Richtung (Y) senkrecht zur ersten Richtung (X) ist, wobei die erste Richtung (X) und die zweite Richtung (Y) parallel zur Wärmedämmschicht (1) sind, und wobei die Kunststoff-Kapselfolie (3) frei von dem Dichtungsrand (33) ist, der sich über die Wärmedämmschicht (1) hinaus erstreckt.

6. Wärmedämmelement (100) gemäß Anspruch 4,
wobei die Kunststoff-Kapselfolie (3) mit der Metallfolie (2) zusammenwirkt, um den geschlossenen Raum zu bilden:
wobei die Metallfolie (2) entlang einer ersten Richtung (X) gefaltet ist und die Wärmedämmschicht (1) um 360 Grad umhüllt, wobei die Kunststoff-Kapselfolie (3) entlang einer zweiten Richtung (Y) gefaltet ist und die Wärmedämmschicht (1) und die Metallfolie (2) um 360 Grad umhüllt, wobei die zweite Richtung (Y) senkrecht zur ersten Richtung (X) ist, wobei die erste Richtung (X) und die zweite Richtung (Y) parallel zur Wärmedämmschicht (1) sind, und wobei die Kunststoff-Kapselfolie (3) frei von dem Dichtungsrand (33) ist, der sich über die Wärmedämmschicht (1) hinaus erstreckt;
wobei zwei gegenüberliegende Seiten der Metallfolie (2) sich teilweise überlappen, um einen Überlappungsbereich zu bilden, und die zwei gegenüberliegenden Seiten der Metallfolie (2) in dem Überlappungsbereich mindestens eine Falte (25) bilden; und
wobei die mindestens eine Falte (25) auf einer Seitenoberfläche der Wärmedämmschicht (1) angeordnet ist.

7. Wärmedämmelement (100) gemäß Anspruch 4,
wobei die Kunststoff-Kapselfolie (3) den geschlossenen Raum bildet;
wobei die Metallfolie (2) so gefaltet ist, dass sie eine hohlzylindrische Form bildet und die Wärmedämmschicht (1) um 360 Grad umhüllt, wobei zwei gegenüberliegende Seiten der Metallfolie (2) sich teilweise überlappen, um einen Überlappungsbereich zu bilden, und die zwei gegenüberliegenden Seiten der Metallfolie (2) in dem Überlappungsbereich mindestens eine Falte (25) bilden; und
wobei die mindestens eine Falte (25) auf einer Seitenoberfläche der Wärmedämmschicht (1) angeordnet ist.

8. Wärmedämmelement (100) gemäß Anspruch 4, wobei die Kunststoff-Kapselfolie (3) den geschlossenen Raum bildet, und wobei die Kunststoff-Kapselfolie (3) eine erste Kunststoff-Kapselteilfolie (31) und eine zweite Kunststoff-Kapselteilfolie (32) umfasst; wobei die erste Kunststoff-Kapselteilfolie (31) die erste Oberfläche (11) der Wärmedämmschicht (1) bedeckt und mindestens einen Teil jeder Seitenoberfläche der Wärmedämmschicht (1) bedeckt, und die zweite Kunststoff-Kapselteilfolie (32) die zweite Oberfläche (12) der Wärmedämmschicht (1) bedeckt und mindestens einen Teil jeder Seitenoberfläche der Wärmedämmschicht (1) bedeckt; und wobei ein Rand der ersten Kunststoff-Kapselteilfolie (31) und ein Rand der zweiten Kunststoff-Kapselteilfolie (32) übereinanderliegen und miteinander verklebt sind, um den Dichtungsrand (33) und den geschlossenen Raum zu bilden, sodass die Wärmedämmschicht (1) kapsuliert ist.

9. Wärmedämmelement (100) gemäß einem der Ansprüche 1 bis 8,
wobei mindestens eine Oberfläche der Wärmedämmschicht (1) mit einem hydrophoben Modifikator aufgebracht ist;
die Dicke des Wärmedämmelements (100) kleiner oder gleich 1,2 mm ist;
die Dicke der Wärmedämmschicht (1) kleiner oder gleich 1,0 mm ist;
die Dicke der Metallfolie (2) größer oder gleich 0,01 mm und kleiner oder gleich 0,1 mm ist; und
die Dicke der Kunststoff-Kapselfolie (3) größer oder gleich 0,01 mm und kleiner oder gleich 0,3 mm ist.

10. Wärmedämmelement (100) gemäß einem der Ansprüche 1 bis 9, ferner umfassend eine Klebeschicht, wobei die Metallfolie (2) über die Klebeschicht an der Wärmedämmschicht (1) befestigt ist.

11. Wärmedämmelement (100) gemäß Anspruch 10,
wobei die Klebeschicht ein Kleberahmen ist, der sich entlang eines Randes der Wärmedämmschicht (1) erstreckt; und/oder
ein äußerer Rand der Klebeschicht bündig mit einem Rand der Wärmedämmschicht ist; und/oder
die Klebeschicht 5 % bis 10 % einer Fläche der Wärmedämmschicht (1) abdeckt.

12. Wärmedämmelement (100) gemäß Anspruch 10,
wobei die Metallfolie (2) so gefaltet ist, dass sie eine hohlzylindrische Form bildet und die Wärmedämmschicht (1) um 360 Grad umhüllt, wobei zwei gegenüberliegende Seiten der Metallfolie (2) sich teilweise überlappen, um einen Überlappungsbereich zu bilden, die zwei gegenüberliegenden Seiten der Metallfolie (2) in dem Überlappungsbereich mindestens eine Falte (25) bilden, und wobei die Klebeschicht an der Falte (25) angeordnet ist.

13. Wärmedämmelement (100) gemäß einem der Ansprüche 1 bis 12,
wobei die Wärmedämmschicht (1) eine Aerogel-Verbundschicht oder einen Dämmfilm umfasst, der Dämm-Nanopulver und Verstärkungsfasern enthält;
die Metallfolie (2) ein oder mehrere der folgenden Materialien umfasst: Aluminiumfolie, Nickelfolie und Kupferfolie;
die Dicke des Wärmedämmelements (100) kleiner oder gleich 1,2 mm ist;
die Dicke der Wärmedämmschicht (1) kleiner oder gleich 1,0 mm ist;
die Dicke der Metallfolie (2) größer oder gleich 0,01 mm und kleiner oder gleich 0,1 mm ist; und
mindestens eine Oberfläche der Wärmedämmschicht (1) mit einem hydrophoben Modifikator aufgebracht ist.

## Revendications

1. Un élément d'isolation thermique (100), comprenant :
une couche d'isolation thermique (1) ; et
une couche d'encapsulation (4),
dans laquelle la couche d'encapsulation (4) entoure la couche d'isolation thermique (1) et forme un espace fermé ;
**caractérisé en ce que** la couche d'encapsulation (4) comprend :
une feuille métallique (2), disposée sur une surface de la couche d'isolation thermique (1) ; et
un film d'encapsulation en plastique (3), disposé sur la surface de la couche d'isolation thermique (1) et/ou sur une surface de la feuille métallique (2),
où le film d'encapsulation en plastique (3) forme l'espace fermé de manière à encapsuler à la fois la couche d'isolation thermique (1) et la feuille métallique (2), ou le film d'encapsulation en plastique (3) coopère avec la feuille métallique (2) pour former l'espace fermé de manière à encapsuler la couche d'isolation thermique (1).

2. L'élément d'isolation thermique (100) selon la revendication 1, dans lequel
la couche d'isolation thermique (1) comprend une première surface (11) et une seconde surface (12) opposées l'une à l'autre, et la feuille métallique (2) comprend une première sous-feuille métallique (21) disposée sur la première surface (11) et une seconde sous-feuille métallique (22) disposée sur la seconde surface (12) ; un bord de la première sous-feuille métallique (21) est affleurant à un bord de la première surface (11), est espacé de celui-ci ou est tangent à celui-ci ; et/ou un bord de la seconde sous-feuille métallique (22) est affleurant à un bord de la seconde surface (12), est espacé de celui-ci ou est tangent à celui-ci.

3. L'élément d'isolation thermique (100) selon la revendication 2,
dans lequel la couche d'isolation thermique (1) comprend en outre une première surface latérale (13) qui est reliée à la première surface (11) et à la seconde surface (12), et la feuille métallique (2) comprend en outre une troisième sous-feuille métallique (23) disposée sur la première surface latérale (13) ; la première sous-feuille métallique (21) couvre 90 % à 100 % d'une aire de la première surface (11) ; et/ou
la couche d'isolation thermique (1) comprend en outre une seconde surface latérale (14) qui est reliée à la première surface (11) et à la seconde surface (12), la seconde surface latérale (14) étant opposée à la première surface latérale (13), et la feuille métallique (2) comprend en outre une quatrième sous-feuille métallique (24) disposée sur la seconde surface latérale (14) ; la seconde sous-feuille métallique (22) couvre 90 % à 100 % d'une aire de la seconde surface (12).

4. L'élément d'isolation thermique (100) selon la revendication 1, dans lequel la feuille métallique (2) est dépourvue d'un bord de scellement (33) s'étendant au-delà de la couche d'isolation thermique (1).

5. L'élément d'isolation thermique (100) selon la revendication 4,
dans lequel le film d'encapsulation en plastique (3) forme l'espace fermé ; et
le film d'encapsulation en plastique (3) comprend un premier sous-film d'encapsulation en plastique (31) et un second sous-film d'encapsulation en plastique (32), le premier sous-film d'encapsulation en plastique (31) étant plié selon une première direction (X) et enveloppant la couche d'isolation thermique (1) et la feuille métallique (2) sur 360 degrés, le second sous-film d'encapsulation en plastique (32) étant plié selon une seconde direction (Y) et enveloppant la couche d'isolation thermique (1) et la feuille métallique (2) sur 360 degrés, la seconde direction (Y) étant perpendiculaire à la première direction (X), la première direction (X) et la seconde direction (Y) étant parallèles à la couche d'isolation thermique (1), et le film d'encapsulation en plastique (3) étant dépourvu du bord de scellement (33) s'étendant au-delà de la couche d'isolation thermique (1).

6. L'élément d'isolation thermique (100) selon la revendication 4,
dans lequel le film d'encapsulation en plastique (3) coopère avec la feuille métallique (2) pour former l'espace fermé :
la feuille métallique (2) est pliée selon une première direction (X) et enveloppe la couche d'isolation thermique (1) sur 360 degrés, le film d'encapsulation en plastique (3) est plié selon une seconde direction (Y) et enveloppe la couche d'isolation thermique (1) et la feuille métallique (2) sur 360 degrés, la seconde direction (Y) étant perpendiculaire à la première direction (X), la première direction (X) et la seconde direction (Y) étant parallèles à la couche d'isolation thermique (1), et le film d'encapsulation en plastique (3) étant dépourvu du bord de scellement (33) s'étendant au-delà de la couche d'isolation thermique (1) ;
deux côtés opposés de la feuille métallique (2) se chevauchent partiellement afin de former une zone de chevauchement, et les deux côtés opposés de la feuille métallique (2) forment au moins un pli (25) dans la zone de chevauchement ; et
ledit au moins un pli (25) est disposé sur une surface latérale de la couche d'isolation thermique (1).

7. L'élément d'isolation thermique (100) selon la revendication 4,
dans lequel le film d'encapsulation en plastique (3) forme l'espace fermé ;
la feuille métallique (2) est pliée pour former une forme cylindrique creuse et enveloppe la couche d'isolation thermique (1) sur 360 degrés, deux côtés opposés de la feuille métallique (2) se chevauchent partiellement afin de former une zone de chevauchement, et les deux côtés opposés de la feuille métallique (2) forment au moins un pli (25) dans la zone de chevauchement ; et
ledit au moins un pli (25) est disposé sur une surface latérale de la couche d'isolation thermique (1).

8. L'élément d'isolation thermique (100) selon la revendication 4,
dans lequel le film d'encapsulation en plastique (3) forme l'espace fermé, et le film d'encapsulation en plastique (3) comprend un premier sous-film d'encapsulation en plastique (31) et un second sous-film d'encapsulation en plastique (32) ; le premier sous-film d'encapsulation en plastique (31) recouvre la première surface (11) de la couche d'isolation thermique (1) et recouvre au moins une partie de chaque surface latérale de la couche d'isolation thermique (1), et le second sous-film d'encapsulation en plastique (32) recouvre la seconde surface (12) de la couche d'isolation thermique (1) et recouvre au moins une partie de chaque surface latérale de la couche d'isolation thermique (1) ; et un bord du premier sous-film d'encapsulation en plastique (31) et un bord du second sous-film d'encapsulation en plastique (32) sont superposés et collés ensemble pour former le bord de scellement (33) et l'espace fermé, de sorte que la couche d'isolation thermique (1) est encapsulée.

9. L'élément d'isolation thermique (100) selon l'une quelconque des revendications 1 à 8,
dans lequel au moins une surface de la couche d'isolation thermique (1) est greffée avec un modificateur hydrophobe ;
l'épaisseur de l'élément d'isolation thermique (100) est inférieure ou égale à 1,2 mm ;
l'épaisseur de la couche d'isolation thermique (1) est inférieure ou égale à 1,0 mm ;
l'épaisseur de la feuille métallique (2) est supérieure ou égale à 0,01 mm et inférieure ou égale à 0,1 mm ; et
l'épaisseur du film d'encapsulation en plastique (3) est supérieure ou égale à 0,01 mm et inférieure ou égale à 0,3 mm.

10. L'élément d'isolation thermique (100) selon l'une quelconque des revendications 1 à 9, comprenant en outre une couche adhésive, dans lequel la feuille métallique (2) est fixée à la couche d'isolation thermique (1) par l'intermédiaire de la couche adhésive.

11. L'élément d'isolation thermique (100) selon la revendication 10,
dans lequel la couche adhésive est un cadre adhésif s'étendant le long d'un bord de la couche d'isolation thermique ; et/ou
un bord extérieur de la couche adhésive est affleurant à un bord de la couche d'isolation thermique ; et/ou
la couche adhésive recouvre 5 % à 10 % d'une aire de la couche d'isolation thermique.

12. L'élément d'isolation thermique (100) selon la revendication 10, dans lequel la feuille métallique (2) est pliée pour former une forme cylindrique creuse et enveloppe la couche d'isolation thermique (1) sur 360 degrés, deux côtés opposés de la feuille métallique (2) se chevauchent partiellement afin de former une zone de chevauchement, les deux côtés opposés de la feuille métallique (2) forment au moins un pli (25) dans la zone de chevauchement, et la couche adhésive est située au niveau du pli (25).

13. L'élément d'isolation thermique (100) selon l'une quelconque des revendications 1 à 12,
dans lequel la couche d'isolation thermique (1) comprend une couche composite d'aérogel ou un film isolant comprenant des nanopoudres isolantes et des fibres de renfort ;
la feuille métallique (2) comprend un ou plusieurs des éléments suivants : feuille d'aluminium, feuille de nickel et feuille de cuivre ;
l'épaisseur de l'élément d'isolation thermique (100) est inférieure ou égale à 1,2 mm ;
l'épaisseur de la couche d'isolation thermique (1) est inférieure ou égale à 1,0 mm ;
l'épaisseur de la feuille métallique (2) est supérieure ou égale à 0,01 mm et inférieure ou égale à 0,1 mm ; et
au moins une surface de la couche d'isolation thermique (1) est greffée avec un modificateur hydrophobe.
